(19) Europäisches Patentamt European Patent Office Office européen des brevets

(11) **EP 4 577 594 B1**

(12) **EUROPÄISCHE PATENTSCHRIFT**

(45) Veröffentlichungstag und Bekanntmachung des Hinweises auf die Patenterteilung:
**01.07.2026   Patentblatt 2026/27**

(21) Anmeldenummer: **23753887.1**

(22) Anmeldetag: **04.08.2023**

(51) Internationale Patentklassifikation (IPC):
**C08J 3/03** (2006.01)      **C08L 23/06** (2006.01)
**C08L 91/06** (2006.01)

(52) Gemeinsame Patentklassifikation (CPC):
(C-Sets verfügbar)
**C08L 91/06; C08J 3/12; C08J 3/203; C08L 23/04;**
C08J 2391/06; C08J 2471/02; C08L 2207/062
(Forts.)

(86) Internationale Anmeldenummer:
**PCT/EP2023/071733**

(87) Internationale Veröffentlichungsnummer:
**WO 2024/041874 (29.02.2024 Gazette 2024/09)**

(54) **DISPERGIERBARE WACHSPARTIKEL**

DISPERSIBLE WAX PARTICLES

PARTICULES DE CIRE DISPERSIBLES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **22.08.2022  EP 22191371**

(43) Veröffentlichungstag der Anmeldung:
**02.07.2025   Patentblatt 2025/27**

(73) Patentinhaber: **CLARIANT INTERNATIONAL LTD 4132 Muttenz (CH)**

(72) Erfinder:
- **WUNDLECHNER, Milena**
  **86690 Mertingen (DE)**
- **BODENDORFER, Simon**
  **86152 Augsburg (DE)**

(74) Vertreter: **Zusammenschluss Clariant IPM Patent & License Management Arabellastrasse 4a 81925 München (DE)**

(56) Entgegenhaltungen:
WO-A1-2012/022389      DE-A1- 19 950 049
US-A- 5 746 812        US-A1- 2005 136 236
US-A1- 2009 298 971    US-A1- 2016 108 334

- **ANONYMOUS: "Product Guide B-G 1 2 Wax Additives", 1 February 2017 (2017-02-01), XP055771034, Retrieved from the Internet <URL:https://www.byk.com/en/service/downloads/technical-brochures?tx_rbdownload_brochuredownloads%5Baction%5D=download& tx_rbdownload_brochuredownloads%5Bcontroller%5D=Brochure& tx_rbdownload_brochuredownloads%5Bitem%5D=314& cHash=6b08eb9c609e610b19b75bd531639a28> [retrieved on 20210202]**
- **JIA YIN-YIN ET AL: "A process for preparing polyethylene wax microspheres and optimization of their dissolution precipitation by response surface methodology", JOURNAL OF APPLIED POLYMER SCIENCE, vol. 129, no. 3, 12 December 2012 (2012-12-12), US, pages 1476 - 1483, XP093018066, ISSN: 0021-8995, DOI: 10.1002/app.38847**

Bemerkungen:
Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)

C-Sets
**C08L 23/04, C08L 71/02**

**Beschreibung**

Die vorliegende Erfindung betrifft dispergierbare Wachspartikel und eine mikronisierte Wachszusammensetzung, ihre Verwendung zur Herstellung einer wässrigen Formulierung, eine wässrige Formulierung umfassend die mikronisierte Wachszusammensetzung und Verfahren zur Herstellung der wässrigen Formulierung.

Wachse und deren Derivate finden Anwendung in zahlreichen Bereichen der Industrie und im Haushalt, u.a. in Pflegeprodukten für den menschlichen Körper, z.B. Kosmetika und Haarpflegemitteln, in Pflegemitteln für Fußböden, Möbel, Kleidung, Schuhe und Automobile, in Medikamenten und Nahrungsmitteln, z.B. als Überzugsmittel, und in der Herstellung von Kunststoff-Zusammensetzungen, (Heiß-) Klebstoffen, Druckfarben, Lacken und anderen Formulierungen.

DE 10 2013007638 beschreibt ein Verfahren zur Herstellung eines Säurewachses aus einer Mischung von Naturwachs und Polyolefinwachs, sowie die Verwendung in Seifen und Schuhcremes.

DE 102018116113 offenbart oxidierte Naturwachse, die unter anderem in Schuhpflegemitteln, Autopflegemitteln, Fußbodenpflegemitteln, Möbelpflegemitteln, technischen Formtrennmitteln, Beschichtungsmitteln, Hydrophobierungsmitteln, Klebemassen, kosmetischen Zusammensetzungen, als Produktionshilfsmittel in Kunststoffverarbeitung und als Trenn- oder Überzugsmittel für Süßwaren und Kaugummis.

Flüssige Wachsdispersionen werden unter anderem für die Herstellung von Lacken, Druckfarben und anderen Beschichtungen verwendet. Allerdings werden oft organische Lösungsmittel als Dispergier-Medien verwendet, die aus ökonomischer und ökologischer Sicht ungünstig sind und oft für die Gesundheit von Mensch und Tier bedenklich sind.

EP-A 2970700 beschreibt ein Lacksystem enthaltend chemisch nicht modifizierte Cellulose, Polyolefin- und/oder Fischer-Tropsch- und/oder Amid- und/oder biobasierte Wachse, und andere Komponenten.

Das Lacksystem weist eine gute Kratzfestigkeit auf, und ist in Butylacetat gut redispergierbar, wenn sich Komponenten des Lacks absetzen. Viele der beschriebenen Formulierungen enthalten jedoch organische Lösungsmittel.

Aufgrund der Nachteile, die mit der Verwendung von organischen Lösungsmitteln im Zusammenhang stehen, gewinnen wässrige Wachsdispersionen zunehmend an Bedeutung, da sie eine günstigere, umweltfreundlichere und weniger toxische Alternative zu den Lösungsmittelhaltigen Dispersionen darstellen.

WO 2006/131147 zeigt eine Zusammensetzung umfassend ein Biozid und ein Wachs oder Paraffin für die Verwendung in Wasser-basierten Farben. Die Zusammensetzungen werden durch Schmelzen von Wachsen in einer wässrigen Biozid-Lösung bei 80 bis 85 °C und anschließende Zugabe von Casein als Verdickungsmittel und einem Tensid zu der Mischung hergestellt, wobei auf die Klumpen-Bildung geachtet wird. Die entstandene Formulierung wird einem Acryl-Lack zugegeben. Aufgrund der erhöhten Temperaturen und des mehrstufigen Verfahrensablaufs ist die Herstellung der Wachsdispersion für ungeübte Anwender kompliziert und ohne das benötigte Fachwissen schwer durchzuführen.

DE4330342 (BASF) offenbart wässrige Polyolefinwachs-dispersionen, die Polyethylen- oder Polypropylenwachs und mit 1,2-Alkylenoxiden umgesetzte Glyceride von überwiegend ungesättigten $C_{16\text{-}22}$ Monocarbonsäuren enthalten. Diese Dispersionen werden durch Einrühren von mikronisiertem Wachs in eine Lösung des Dispergiermittels in vollentsalztem Wasser hergestellt.

Zwar können die fertigen Wachsdispersionen kommerziell vertrieben werden und bereits in gebrauchsfertiger Form den Anwendern zur Verfügung gestellt werden. Dies hat jedoch oft den Nachteil, dass aufgrund des hohen Wasseranteils deutlich größere Volumina transportiert und gelagert werden müssen, als wenn das Wachs in fester Form vertrieben würde, und erst kurz vor Anwendung von den Anwendern dispergiert würde. Gleichzeitig ist die Haltbarkeit von wässrigen Wachsdispersionen oft schlechter als die des festen Wachses, und die Stabilität der Dispersionen ist oft begrenzt, sodass die gelieferten Dispersionen schnell nach Erwerb verbraucht werden sollten.

Es besteht daher Bedarf an Wachsen, die sich leicht in Wasser oder in wässrigen Formulierungen wie wasserbasierten Lacken und Druckfarben dispergieren lassen.

Leicht dispergierbare Wachspartikel können es dem Anwender ermöglichen, wässrige Wachsdispersionen vor Ort in dem eigenen Betrieb herzustellen, und sofort zu verwenden. Hierdurch können unter anderem Transport- und Lagerkosten reduziert werden, da nur noch das feste Wachs erworben werden muss.

DE 10 2004059060 offenbart die Herstellung und Verwendung von lipophilen Wachsen, die einfach in ölige Farben und Lacke eingerührt werden können. Eine Dispergierbarkeit in Wasser ist nicht erwähnt.

DE 19620810 beschreibt Mischungen von nicht-funktionalisierten Polyethylen- oder Polypropylen-Wachsteilchen mit bestimmten hydrophilen Dispergatoren, die insbesondere in Form rieselfähiger Pulver vorliegen und für die spätere Herstellung von wässrigen Wachsdispersionen vorgesehen sind. Die Pulver stellen Mischungen von nicht funktionalisiertem Polyolefinwachs und mit 1,2-Alkylenoxiden umgesetzten Glyceriden von überwiegend ungesättigten $C_{16\text{-}22}$ Monocarbonsäuren dar, die zusätzlich Hydroxylgruppen enthalten können. Das Vermischen wird ohne Zugabe von Wasser durchgeführt. Die erhaltenen Produkte sollen ein rieselfähiges Pulver darstellen, das sich bei der Zugabe von Wasser problemlos einrühren lässt. Die Bedingungen für die Herstellung einer Dispersion sind nicht offenbart. Das Verfahren erfordert ein spezifisches Dispergiermittel, das nicht notwendigerweise für jede Anwendung geeignet ist, und Kenntnisse in der Herstellung von Wachsdispersionen, die manchem Endanwender nicht notwendigerweise zugänglich sind.

US 2016018334 offenbart die Verwendung einer nach dem PIT-Verfahren hergestellten O/W Emulsion zum Schmieren von Transportbändern in der Lebensmittelindustrie. Somit wird weder ein mikronisiertes Wachsadditiv noch eine Dispersion offenbart, die durch Trockenzerkleinerung eines Wachses hergestellt werden.

Die Dokumente US 5746812 und WO 2012022389 beschreiben Wachsdispersionen, die mikronisierte Wachse enthalten. In diesen Dokumenten wird nirgendwo beschrieben, dass das Wachs gemeinsam mit dem Emulgator trocken zerkleinert wird.

US 20090294971 beschreibt die Zerkleinerung von mit Hilfe eines Emulgators dispergierten Wachsen in einem MICROFLUIDIZERO Prozessor, um eine stabilere Dispersion zu erhalten. Es wird weder ein Trockenzerkleinerungsverfahren noch ein Produkt, das durch ein Trockenzerkleinerungsverfahren hergestellt wurde, offenbart.

Jian et al, J.Appl. Polymer Sc., 12.12.2012, 1476-1483 beschreibt Polyethylenwachs (PEW)-Mikrokugeln, die durch das Lösungs-Fällungs-Verfahren unter Verwendung eines PEW-Nebenprodukts als Ausgangsmaterial hergestellt wurden. Es wird weder ein Trockenzerkleinerungsverfahren noch ein Produkt, das durch ein Trockenzerkleinerungsverfahren hergestellt wurde, offenbart.

DE 10 2015226240 beschreibt Reiskleiewachse, die mit einem sauerstoffhaltigen Gas gebleicht und zugleich polar modifiziert werden. Diese haben den Vorteil, dass sie sich besser in Wasser und polaren Lösungsmitteln dispergieren lassen als unmodifizierte Reiswachse. Allerdings erfordert das Dispergieren solcher modifizierten Wachse gewisse Kenntnisse und Erfahrung, die manchem Endanwender nicht notwendigerweise zugänglich sind.

Es besteht demnach weiterhin ein Bedarf an dispergierbaren Wachszusammensetzungen, die sich rasch und ohne großen Aufwand in Wasser und in wässrigen Formulierungen wie wasserbasierten Lacken und Druckfarben dispergieren lassen, wodurch die Herstellung von Wachsdispersionen auch einem unerfahrenen Endanwender ermöglicht wird, und eine leichte Modifizierung von fertigen Produkten durch Beimischung der Zusammensetzungen zugänglich wird.

Es wurde nun überraschend gefunden, dass durch Trockenzerkleinern eines Wachses in Anwesenheit mindestens eines Emulgators eine mikronisierte Wachszusammensetzung erhalten wird, die sich schnell in Wasser und in wasserbasierten Formulierungen dispergieren lässt, z.B. durch Rühren, Schütteln oder sogar Schwenken. Die Geschwindigkeit der Dispergierung, die Vermeidung von Agglomeraten und die Stabilität der erhaltenen Dispersionen sind überraschenderweise deutlich besser, als bei Vermischung des Wachses mit dem Emulgator nachdem die Zerkleinerung bereits erfolgt ist. In Lacken und Beschichtungen führen die mikronisierten Wachszusammensetzungen zu guter Kratzfestigkeit. Die mikronisierten Wachszusammensetzungen haben zudem eine gute Rieselfähigkeit.

Ein Gegenstand der Erfindung ist daher ein Verfahren zur Herstellung einer mikronisierten Wachszusammensetzung (C), umfassend den Schritt:

Trockenzerkleinern mindestens eines Wachses (W) in Anwesenheit mindestens eines Emulgators (E), bevorzugt in flüssiger oder gelöster Form, und optional in Anwesenheit mindestens eines Dichteadditivs (D) mit einer Dichte bei 20 °C von > 1 g/cm$^3$, wobei das Dichteadditiv (D) in Wasser bei 20 °C im Wesentlichen unlöslich ist, und optional in Anwesenheit mindestens eines weiteren Additivs (A), das sich von dem mindestens einen Wachs (W), dem mindestens einen Emulgator (E) und dem mindestens einen Dichteadditiv (D) unterscheidet.

Zerkleinern bedeutet die Aufteilung von festen Stoffen in kleinere Teile durch Einwirkung mechanischer Kräfte. Die meisten Zerkleinerungsapparate sind für die Trockenzerkleinerung ausgelegt. Die Zerkleinerung von pastösen bis flüssigen Dispersionen bezeichnet man als Nasszerkleinerung (vgl. Römpp, 9. Auflage).

Durch die Trockenzerkleinerung kann es zu einer Erwärmung der zu zerkleinernden Partikel kommen. Falls die Erwärmung zu stark wird, kann mit Wasser gekühlt werden. Diese Zerkleinerung unter Kühlung ist jedoch nicht mit einer Nasszerkleinerung gleichzusetzen, denn die Wassermenge wird so geringgehalten, dass sich die Produkteigenschaften nicht ändern. Findet die Trockenzerkleinerung in einer Mühle statt, wird der Emulgator (E) über eine volumetrische oder gravimetrische Dosierung in den Mahlraum zudosiert, während das Wachs (W) vermahlen wird.

Im Sinne der Erfindung wird auch das Aufschmelzen eines festen Wachses, welches nachfolgend durch Versprühen im Sprühturm zerkleinert wird, als Trockenzerkleinerung bezeichnet.

In "gelöster Form" heißt, dass der Emulgator im Lösungsmittel in hochkonzentrierter Form vorliegt, d.h. dass gerade so viel Lösungsmittel eingesetzt wird, dass die erforderliche Menge an Emulgator sich vollständig löst und der Emulgator gesprüht oder gepumpt werden kann. Die Lösungsmittelmenge sollte die zur vollständigen Lösung notwendige Lösungsmittelmenge jedoch nicht um mehr als 30%, übersteigen.

Diese Beschränkung der Lösungsmittelmenge ist erforderlich, damit die mikronisierte Wachszusammensetzung (C) nicht als Feststoff/Lösungsmittelmischung (Dispersion) erhalten wird, die Umhüllung der Wachspartikel mit Emulgator gewährleistet ist und damit die vorteilhaften Eigenschaften der mikronisierten Wachszusammensetzung erhalten bleiben.

Bevorzugt wird bei der Trockenzerkleinerung weniger als 20 Gew.-% Wasser, besonders bevorzugt weniger 10 Gew.-%, ganz besonders bevorzugt weniger 5 Gew.-% bezogen auf die zur Zerkleinerung eingesetzte Gesamtmenge des Wachses, verwendet.

Ein weiterer Gegenstand der Erfindung ist eine mikronisierte WachsZusammensetzung (C) umfassend:

a) mindestens ein Wachs (W);
b) mindestens einen Emulgator (E);
c) optional mindestens ein Dichteadditiv (D) mit einer Dichte bei 20 °C von > 1 g/cm$^3$, bevorzugt > 1,3 g/cm$^3$, wobei das Dichteadditiv (D) in Wasser bei 20 °C im Wesentlichen unlöslich ist; und
d) optional mindestens ein weiteres Additiv (A), das sich von dem mindestens einen Wachs (W), dem mindestens einen Emulgator (E) und dem mindestens einen Dichteadditiv (D) unterscheidet,

wobei die mikronisierte Wachszusammensetzung (C) durch Trockenzerkleinern des mindestens eines Wachses (W) in Anwesenheit des mindestens eines Emulgators (E), bevorzugt in flüssiger oder gelöster Form, und gegebenenfalls in Anwesenheit des mindestens einen Dichteadditivs (D) und/oder des mindestens einen weiteren Additivs (A) erhalten wird.

Bevorzugt liegt der Wassergehalt der mikronisierten Wachszusammensetzung (C) unter 20 Gew.%, besonders bevorzugt unter 10 Gew.-%, ganz besonders bevorzugt unter 5 Gew.-% bezogen auf das Gesamtgewicht der mikronisierten Wachszusammensetzung (C). Der Wassergehalt wird mit einem Halogen Moisture Analyzer HR73 der Fa. Mettler Toledo bestimmt, indem eine vorgegebene Menge (zwischen 2 und 7g) der Probe (Genauigkeit ± 0,0001 g) bei 105°C analysiert wird. Die Messung wird nach den Herstellervorgaben durchgeführt. Sollte der Gewichtsverlust weniger als 1 mg nach 90 Sekunden betragen wird die Messung nach dieser Zeit abgebrochen und der Wassergehalt bestimmt.

Vorzugsweise besteht die mikronisierte Wachszusammensetzungen aus diesen Komponenten. Demnach ist die erfindungsgemäße Wachszusammensetzung (C) durch das erfindungsgemäße Verfahren erhältlich.

Der Ausdruck "in Wasser bei 20 °C im Wesentlichen unlöslich" bedeutet, dass bei 20 °C höchstens 20 g, bevorzugt höchstens 10 g, mehr bevorzugt höchstens 5 g, mehr bevorzugt höchstens 1 g des Dichteadditivs (D) in 1 L Wasser gelöst werden können.

Der Ausdruck "mikronisiert" bedeutet im vorliegenden Kontext, dass die (mittlere) Teilchengröße der betroffenen Substanz gegenüber dem Ausgangszustand verkleinert ist, und weniger als 1 Vol.-% der Teilchen eine Teilchengröße von 1000 μm oder höher aufweisen.

Teilchengrößen-Verteilungen können beispielsweise mit der Methode der Laserbeugung gemessen werden, wie sie beispielsweise in "A Guidebook to Particle Size Analysis" (Horiba Instruments, Inc., 2019) beschrieben ist. Ein hierfür geeignetes Messinstrument ist beispielsweise LA-960 der Firma Horiba Instruments, Inc., welches Teilchengrößen im Bereich von 10 nm bis 5 mm messen kann, oder Mastersizer 3000 der Firma Malvern Panalytical, welches Teilchengrößen im Bereich von 10 nm bis 3,5 mm messen kann.

Bevorzugt umfasst die mikronisierte Wachszusammensetzug (C):

a) 40 bis 99,9 Gew.-%, bevorzugt 50 bis 99 Gew.-%, mehr bevorzugt 60 bis 98,8 Gew.-%, mehr bevorzugt 65 bis 98,5 Gew.-%, mehr bevorzugt 70 bis 98 Gew.-%, bezogen auf das Gewicht der mikronisierten Wachszusammensetzung (C), des mindestens einen Wachses (W);

b) 0,1 bis 20 Gew.-%, bevorzugt 1 bis 15 Gew.-%, mehr bevorzugt 1,2 bis 8 Gew.-%, mehr bevorzugt 1,5 bis 5 Gew.-%, mehr bevorzugt 2 bis 4 Gew.-%, bezogen auf das Gewicht der mikronisierten Wachszusammensetzung (C), des mindestens einen Emulgators (E);

c) optional 0 bis 59,9 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gewicht der mikronisierten Wachszusammensetzung (C), des mindestens einen Dichteadditivs (D); und

d) optional 0 bis 50 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gewicht der mikronisierten Wachszusammensetzung (C), des mindestens einen weiteren Additivs (A).

Vorzugsweise beträgt die Summe von a), b), c) und d) 100 Gew.-% der mikronisierten Wachszusammensetzung (C), sodass die mikronisierte Wachszusammensetzung (C) aus dem mindestens einen Wachs (W), dem mindestens einen Emulgator (E), optional dem mindestens einen Dichteadditiv (D) und optional dem mindestens einen weiteren Additiv (A) besteht.

Wenn das mindestens eine Dichteadditiv (D) enthalten ist, beträgt dessen Menge typischerweise mindestens 0,1 Gew.-%, bevorzugt mindestens 1 Gew.-%, mehr bevorzugt mindestens 5 Gew.-%, bezogen auf das Gewicht der mikronisierten Wachszusammensetzung (C). In diesen Fällen wird die Obergrenze der Menge an Wachs (W) entsprechend angepasst, damit die Summe der Komponenten 100 Gew.-% nicht übersteigt.

Wenn das mindestens eine weitere Additiv (A) enthalten ist, beträgt dessen Menge typischerweise mindestens 0,01 Gew.-%, bevorzugt mindestens 0,1 Gew.-%, mehr bevorzugt mindestens 1 Gew.-%, bezogen auf das Gewicht der mikronisierten Wachszusammensetzung (C). In diesen Fällen wird die Obergrenze der Menge an Wachs (W) entsprechend angepasst, damit die Summe der Komponenten 100 Gew.-% nicht übersteigt.

Ein weiterer Gegenstand der Erfindung ist eine wässrige Formulierung umfassend Wasser und 0,01 bis 60 Gew.-%, bevorzugt 0,1 bis 50 Gew.-%, mehr bevorzugt 0,2 bis 4 Gew.-% oder 30 bis 40 Gew.-%, mehr bevorzugt 0,3 bis 3 Gew.-% oder 32 bis 38 Gew.-%, bezogen auf das Gesamtgewicht der wässrigen Formulierung, an mikronisierter Wachszusammensetzung (C), wobei die mikronisierte Wachszusammensetzung (C) in dem Wasser dispergiert ist.

Ferner ist Gegenstand der Erfindung ein Verfahren zur Herstellung einer wässrigen Formulierung, umfassend die Schritte:

i) Bereitstellen von Wasser, der mikronisierten Wachszusammensetzung (C), und optional weiterer Komponenten;
ii) Vermischen der in Schritt i) bereitgestellten Komponenten, vorzugsweise durch Rühren, Schütteln oder Schwenken.

Gegenstand der Erfindung ist auch die Verwendung einer mikronisierten Wachszusammensetzung (C) zur Herstellung einer wässrigen Formulierung sowie die Verwendung der erfindungsgemäßen mikronisierten Wachszusammensetzung (C) und/oder eines daraus erhaltenen Wachskonzentrats zum Verbessern der Kratzfestigkeit einer aus einer gebrauchsfertigen wässrigen Formulierung hergestellten Beschichtung oder eines Lacks.

Die erfindungsgemäße mikronisierte Wachszusammensetzung (C) und ihre Komponenten, die im erfindungsgemäßen Verfahren eingesetzt werden, sind im Folgenden näher beschrieben.

Wachs (W)

Das Wachs (W), welches in der mikronisierten Wachszusammensetzung (C) enthalten ist, kann im Prinzip ein beliebiges Wachs sein. Beispielsweise kann das Wachs (W) ausgewählt sein aus der Gruppe bestehend aus synthetischen organischen Wachsen, teilsynthetischen organischen Wachsen, Naturwachsen (biobasierten Wachsen), und Mischungen davon, wobei das Wachs optional oxidiert oder auf sonstige Weise chemisch modifiziert sein kann.

Als Wachskomponente sind synthetische Kohlenwasserstoffwachse geeignet, z. B. Polyolefinwachse. Diese können durch thermischen Abbau verzweigter oder unverzweigter Polyolefin-Kunststoffe oder durch direkte Polymerisation von Olefinen hergestellt werden. Als Polymerisationsverfahren kommen z.B. radikalische Verfahren in Frage, wobei die Olefine, in der Regel Ethylen, bei hohen Drücken und Temperaturen zu mehr oder minder verzweigten Polymerketten umgesetzt werden; daneben kommen Verfahren in Betracht, bei denen Ethylen und/oder höhere 1-Olefine wie z. B. Propylen, 1-Buten, 1-Hexen etc. mit Hilfe metallorganischer Katalysatoren, beispielsweise Ziegler-Natta oder Metallocen-Katalysatoren, zu unverzweigten oder verzweigten Wachsen polymerisiert werden.

Entsprechende Methoden zur Herstellung von Olefin-Homo- und -Copolymerwachsen sind beispielsweise in Ullmann's Encyclopedia of Industrial Chemistry, 5. Auflage, Vol. A 28, Weinheim 1996 in Kapitel 6.1.1./6.1.2. (Hochdruckpolymerisation, (Wachse), Kapitel 6.1.2. (Ziegler-Natta-Polymerisation, Polymerisation mit Metallocen-katalysatoren) sowie Kapitel 6.1.4. (thermischer Abbau) beschrieben.

Weiterhin können sogenannte Fischer-Tropsch-Wachse eingesetzt werden. Diese werden katalytisch aus Synthesegas hergestellt und unterscheiden sich von Polyethylen-Wachsen durch niedrigere mittlere Molmassen, engere Molmassenverteilungen und niedrigere Schmelzviskositäten.

Die eingesetzten Kohlenwasserstoffwachse können unfunktionalisiert oder durch polare Gruppen funktionalisiert sein.

Der Einbau solcher polarer Funktionen kann nachträglich durch entsprechende Modifizierung der unpolaren Wachse erfolgen, z. B. durch Oxidation mit Luft oder durch Aufpfropfung polarer Olefinmonomere, beispielsweise $\alpha,\beta$-ungesättigter Carbonsäuren und/oder deren Derivaten, etwa Acrylsäure oder Maleinsäureanhydrid. Ferner können polare Wachse durch Copolymerisation von Ethylen mit polaren Comonomeren, beispielsweise Vinylacetat oder Acrylsäure hergestellt werden; weiterhin durch oxidativen Abbau von höhermolekularen, nicht wachsartigen Ethylen-Homo- und -Copolymeren. Entsprechende Beispiele finden sich etwa in Ullmann's Encyclopedia of Industrial Chemistry, 5. Auflage, Vol. A 28, 1996, Kapitel 6.1.5.

Geeignete polare Wachse sind außerdem Amidwachse, wie sie z. B. durch Umsetzung von längerkettigen Carbonsäuren, z. B. Fettsäuren, mit ein oder mehrwertigen Aminen zugänglich sind. Hierfür typischerweise verwendete Fettsäuren weisen Kettenlängen im Bereich zwischen 12 und 24, bevorzugt zwischen 16 und 22 C-Atomen auf und können gesättigt oder ungesättigt sein. Bevorzugt eingesetzte Fettsäuren sind die C16 - und C18 -Säuren, insbesondere Palmitinsäure und Stearinsäure oder Gemische aus beiden Säuren. Als Amine kommen neben Ammoniak insbesondere mehrwertige, z. B. zweiwertige organische Amine in Frage, wobei Ethylendiamin bevorzugt ist. Besonders bevorzugt ist die Verwendung von unter der Bezeichnung EBS-Wachs (Ethylenbisstearoyldiamid) handelsüblichem, aus technischer Stearinsäure und Ethylendiamin hergestelltem Wachs.

Weiterhin können biobasierte Wachse eingesetzt werden, bei denen es sich in der Regel um Esterwachse handelt. Im Allgemeinen werden unter biobasierten Wachsen jene Wachse verstanden, die auf einer nachwachsenden Rohstoffbasis aufbauen. Hierbei kann es sich sowohl um native als auch um chemisch modifizierte Esterwachse handeln. Typische native biobasierende Wachse sind beschrieben in Ullmann's Encyclopedia of Industrial Chemistry, 5. Auflage, Vol. A 28, 1996, Kapitel 2. Dazu gehören Palmwachse wie Carnaubawachs, Gräserwachse wie Candelillawachs, Zuckerrohrwachs und Strohwachse, Bienenwax, Reiswachs, etc.. Chemisch modifizierte Wachse gehen meist durch Oxidation (zum Beispiel durch ein Gemisch aus $CrO_3$ und $H_2SO_4$), Veresterung, Umesterung, Amidierung, Hydrierung, etc. aus den Esterwachsen oder pflanzenölbasierenden Fettsäuren hervor. Beispielsweise fallen hierunter auch Metathese-Produkte von Pflanzenölen.

Zu den biobasierten Wachsen zählen darüber hinaus auch Montanwachse, entweder in unmodifizierter oder raffinierter bzw. derivatisierter Form. Detaillierte Angaben zu derartigen Wachsen finden sich z. B. in Ullmann's Encyclopedia of Industrial Chemistry, 5. Auflage, Vol. A 28, 1996, Kapitel 3. (Wachse).

Vor der Trockenzerkleinerung kann das Wachs (W) eine beliebige Teilchengröße aufweisen. Beispielsweise kann das Wachs (W) ein Granulat mit einem Teilchendurchmesser von >1 mm sein, zum Beispiel 2 bis 10 mm. Das Wachs (W) kann vor der Trockenzerkleinerung jedoch auch Teilchendurchmesser von ≤ 1 mm haben, zum Beispiel 200 bis 900 μm.

Die erfindungsgemäße mikronisierte Wachszusammensetzung (C) weist auch dann eine gute Dispergierbarkeit in Wasser und in wasserbasierten Formulierungen wie wasserbasierten Lacken und Druckfarben auf, wenn das Wachs (W) als solches im Wesentlichen keine stabile Dispersion in Wasser bildet. Daher sind funktionelle Gruppen entbehrlich, die die Dispergierbarkeit des Wachses erhöhen können. Allerdings kann das Wachs (W) auch funktionelle Gruppen enthalten, die bestimmte Eigenschaften des Wachses beeinflussen.

Daher bildet das Wachs (W) in einer Ausführungsform im Wesentlichen keine stabile Dispersion in Wasser. Im vorliegenden Kontext ist dies der Fall, wenn nach Einrühren des Wachses (W) in Wasser bei 20 °C (ca. 10 Gew.-% Wachs) in Abwesenheit eines Emulgators mit einem Labor-Flügelrührer bei einer Rührgeschwindigkeit von 700 U/min für 5 min eine sichtbare Phasentrennung innerhalb von 1 Stunde stattfindet.

In einer solchen Ausführungsform ist das Wachs (W) bevorzugt nicht oxidiert, und ist nicht mit heteroatom-enthaltenden Gruppen gepfropft oder copolymerisiert. Bevorzugt enthält das Wachs (W) in dieser Ausführungsform keine polaren Gruppen.

Oxidation und Pfropfung können zwar die Dispergierbarkeit eines Wachses (W) in Wasser und wasserbasierten Formulierungen positiv beeinflussen, jedoch können hierbei auch andere Eigenschaften des Wachses negativ beeinflusst werden. Diese Ausführungsform ist oft bei synthetischen oder teilsynthetischen Wachsen, insbesondere bei Polyolefinwachsen relevant, deren Eigenschaften häufig durch die gewählten Synthesebedingungen eingestellt werden, und bei denen eine Veränderung dieser Eigenschaften unerwünscht ist.

Bevorzugt haben solche Wachse (W) eine Säurezahl (gemessen nach DIN EN ISO 2114:2000), und bevorzugt eine Verseifungszahl (gemessen nach DIN EN ISO 3681:2018) und/oder Hydroxylzahl (gemessen nach DIN EN ISO 2554:1997) von jeweils 0 bis 40 mg KOH/g, bevorzugt 0 bis 20 mg KOH/g, mehr bevorzugt 0 bis 10 mg KOH/g. Polyolefinwachse können unter anderem durch Ziegler-Natta-Katalyse oder durch Metallocen-Katalyse, bevorzugt Metallocen-Katalyse hergestellt werden, und haben bevorzugt eine Säurezahl von 0 bis 5 mg KOH/g.

Im Allgemeinen kann das Wachs ausgewählt sein aus Polyolefin-Wachsen, Mineralwachsen, Montanwachs, Reiskleiewachs, Bienenwachs, Sonnenblumenwachs, Maiswachs, Carnaubawachs, Fischer-Tropsch-Wachsen, Paraffinwachsen, Esterwachsen und Amidwachsen. Bevorzugt ist das Wachs ausgewählt aus Polyethylen-Wachs, Polypropylen-Wachs, Poly(ethylen-co-propylen)-Wachs, Reiskleiewachs, Maiswachs und Sonnenblumenwachs, mehr bevorzugt ist das Wachs ein HDPE-Wachs (Polyethylen hoher Dichte).

Auch mikronisierte Wachszusammensetzungen (C) in denen das reine Wachs (W) polare Gruppen enthält, weisen eine deutlich verbesserte Dispergierbarkeit auf. Daher kann das Wachs (W) in einer weiteren Ausführungsform polare Gruppen enthalten, bevorzugt oxidiert, mit heteroatom-enthaltenden Gruppen gepfropft oder anderweitig chemisch modifiziert sein.

Eine Oxidation ist unter anderem auch für Naturwachse, insbesondere Montanwachs, Reiskleiewachs, Sonnenblumenwachs, Maiswachs und Carnaubawachs relevant, da diese im Rohzustand meist eine dunkle Färbung aufweisen und beispielsweise durch Oxidation gebleicht werden können. Bei Wachsen (W), die polare Gruppen enthalten, beispielsweise bei oxidierten Naturwachsen, liegt die Säurezahl oft über 15 mg KOH/g, vorzugsweise zwischen 20 und 200 mg KOH/g.

Beispielsweise kann die Säurezahl im Bereich von 45 bis 70 mg KOH/g oder im Bereich von 70 bis 170 mg KOH/g liegen. Solche Wachse können auch weiter derivatisiert worden sein, z.B. durch Veresterung, Amidierung oder Verseifung.

Das Wachs (W) kann vor der Mikronisierung jedoch auch anderweitig derivatisiert worden sein. Beispielsweise können Wachse, bevorzugt Polyolefinwachse, mit heteroatom-enthaltenden Gruppen gepfropft sein. Hierzu gehören zum Beispiel Wachse, die mit Carbonsäurederivaten mit ethylenisch ungesättigten Gruppen gepfropft wurden. Bevorzugt sind solche derivatisierten Wachse gepfropft mit heteroatom-enthaltenden Gruppen ausgewählt aus der Gruppe bestehend aus Acrylsäure, Alkylacrylaten, Acrylamiden, Methacrylsäure, Alkylmethacrylaten, Methacrylamiden, Maleinsäure, Alkylmaleaten, Maleinsäureanhydrid und Maleimid, mehr bevorzugt Maleinsäure, Maleinsäureanhydrid und Maleimid, mehr bevorzugt Maleinsäureanhydrid. Das mit diesen Gruppen gepfropfte Wachs ist bevorzugt ein Polyethylenwachs, Polypropylenwachs oder Poly(ethylen-co-propylen)-Wachs, mehr bevorzugt ein Polyethylenwachs oder ein Polypropylenwachs, mehr bevorzugt ein HDPE-Wachs.

Bevorzugt ist das Wachs (W) ein Polyolefinwachs mit einem Tropfpunkt (gemessen nach DIN ISO 2176:1995) im Bereich von 100 bis 160 °C, mehr bevorzugt im Bereich von 110 bis 150 °C, mehr bevorzugt von 120 bis 145 °C, mehr bevorzugt von 125 bis 135 °C, und einer Dichte im Bereich von 0,88 bis 1,06 g/cm$^3$, mehr bevorzugt im Bereich von 0,90 bis 1,02 g/cm$^3$, mehr bevorzugt im Bereich von 0,90 bis 1,00 g/cm$^3$, mehr bevorzugt im Bereich von 0,90 bis 0,98 g/cm$^3$.

Emulgator (E)

Der Emulgator (E) kann ein beliebiger Emulgator sein, der die Dispergierbarkeit von unpolaren Feststoffen in polaren Medien, insbesondere Wasser verbessern kann. Als Emulgatoren sind nichtionische, anionische, kationische und amphotere Tenside geeignet.

Als nichtionische Tenside geeignet sind beispielsweise Fettalkoholalkoxylate, die optional Alkylterminiert sein können, Fettsäurealkoxylate, die optional Alkylterminiert sein können, Alkylglucoside, Alkylpolyglucoside, Alkylphenolethoxylate, Fettsäureester von Polyglycerinen und alkoxylierte Fettsäureglyceride. Bevorzugte nichtionische Tenside sind $C_8$-$C_{30}$ Fettalkoholalkoxylate und $C_8$-$C_{30}$ Fettsäurealkoxylate mit 1 bis 100, bevorzugt 2 bis 50, mehr bevorzugt 3 bis 10 Alkylenoxid-Einheiten, bevorzugt Ethylenoxid- und/oder Propylenoxid-Einheiten, mehr bevorzugt Ethylenoxid-Einheiten.

Als anionische Tenside geeignet sind beispielsweise Fettsäuresalze, Alkylbenzolsulfonsäuresalze, Alkylsulfonsäuresalze, Fettalkoholsulfate, Alkylethersulfate, Sulfoacetate und Tauride. Bevorzugte anionische Tenside sind Alkalimetallsalze der C8-C30 Fettsäuren, Alkalimetallsalze der C8-C30 Alkylbenzolsulfonsäuren und Alkalimetallsalze der C8-C30 Alkylsulfonsäuren.

Als kationische Tenside geeignet sind beispielsweise quaternäre Ammoniumsalze, bevorzugt Halogenide, mehr bevorzugt Chloride, wie Tetraalkylammoniumsalze mit 1, 2 oder 3 $C_8$-$C_{30}$ Alkylresten und 3, 2 oder 1 $C_1$-$C_4$ Alkylresten, und quaternäre Ammoniumsalze von Alkanolamin-Fettsäureestern (Esterquats). Bevorzugte kationische Tenside sind $C_8$-$C_{30}$ Alkyltrimethylammoniumsalze, Di($C_8$-$C_{30}$-Alkyl)dimethylammoniumsalze, und Esterquats auf Basis von quaternisierten Triethanolamin-Estern mit $C_8$-$C_{30}$ Fettsäuren.

Als amphotere Tenside geeignet sind beispielsweise Betain-Derivate enthaltend langkettige Alkylgruppen, bevorzugt $C_5$-$C_{30}$ Alkylgruppen, und Sulfobetaine enthaltend langkettige Alkylgruppen, bevorzugt $C_5$-$C_{30}$ Alkylgruppen.

Bevorzugt ist der Emulgator (E) ein nichtionischer Emulgator, z.B. ein nicht-ionisches Tensid. Mehr bevorzugt ist der Emulgator (E) ein nicht-ionischer Emulgator, welcher bei 20 °C flüssig ist oder bei 20°C in Wasser löslich ist.

Die Beschaffenheit eines nicht-ionischen Emulgators kann beispielsweise durch das Masse-Verhältnis zwischen dem polaren und dem unpolaren Teil eines Tensids dargestellt werden und wird über den HLB-Wert ("Hydrophil-Lipophil-Balance", das hydrophil-lipophile Verhältnis des Moleküls) definiert. Der Grad dieses hydrophillipophilen Verhältnisses kann durch Berechnung von Werten für die verschiedenen Bereiche des Moleküls bestimmt werden, wie von Griffin (vgl. z. B. Journal of the Society of Cosmetic Chemists, 5 (4), 249-256 (1954)) beschrieben. Die Methode von

Griffin wurde in erster Linie für nicht-ionische Tenside entwickelt, die Berechnung des HLB-Wertes ergibt sich nach folgender Formel:

$$HLB = 20 * Mh/M,$$

wobei Mh die Molekülmasse des hydrophilen Teils des Moleküls und M die Molekülmasse des gesamten Moleküls ist, was einen Wert auf einer Skala von 0 bis 20 ergibt.

Ein HLB-Wert von 0 entspricht einem vollständig lipophilen Molekül, ein HLB-Wert von 20 entspricht einem vollständig hydrophilen Molekül.

Der Emulgator (E), der in dem erfindungsgemäßen Verfahren eingesetzt wird und in der Wachszusammensetzung (C) enthalten ist, ist vorzugsweise ein nicht-ionischer Emulgator mit einem HLB-Wert im Bereich von 6 bis 16, bevorzugt 7 bis 15, mehr bevorzugt 9 bis 13, mehr bevorzugt 10 bis 12.

Der Emulgator (E) ist in der mikronisierten Wachszusammensetzung (C) bevorzugt in einer Menge von 0,1 bis 20 Gew.-%, mehr bevorzugt 1 bis 15 Gew.-%, mehr bevorzugt von 1,2 bis 8 Gew.-%, mehr bevorzugt von 1,5 bis 5 Gew.-%, mehr bevorzugt von 2 bis 4 Gew.-%, bezogen auf das Gewicht der mikronisierten Wachszusammensetzung (C) enthalten.

Optionale Dichteadditive (D)

Optional kann die mikronisierte Wachszusammensetzung (C) ein Dichteadditiv (D) mit einer Dichte bei 20 °C von > 1 g/cm$^3$, bevorzugt > 1,1 g/cm$^3$, mehr bevorzugt 1,2 bis 10,0 g/cm$^3$, mehr bevorzugt 1,3 bis 5 g/cm$^3$, mehr bevorzugt 1,4 bis 4,8 g/cm$^3$ enthalten.

Das Dichteadditiv (D), wenn vorhanden, dient der Erhöhung der Dichte der mikronisierten Wachszusammensetzung (C), damit diese beim Dispergieren in Wasser möglichst nicht auf der wässrigen Phase aufschwimmt. Aus diesem Grund muss das Dichteadditiv (D) in Wasser bei 20 °C im Wesentlichen unlöslich sein. Ein in Wasser gut lösliches Additiv würde die Dichte der wässrigen Phase erhöhen und damit den gegenteiligen Effekt hervorrufen.

Die Menge des Dichteadditivs (D) in der mikronisierten Wachszusammensetzung (C) ist bevorzugt so gewählt, dass die Dichte der mikronisierten Wachszusammensetzung (C) ungefähr der Dichte des Wassers entspricht, oder geringfügig darüber liegt. Sofern die mikronisierte Wachszusammensetzung (C) für die Dispergierung in einer wässrigen Lösung vorgesehen ist, die eine höhere oder niedrigere Dichte als reines Wasser hat, kann die Menge des Dichteadditivs (D) auch so gewählt werden, dass die Dichte der mikronisierten Wachszusammensetzung (C) ungefähr der Dichte dieser wässrigen Lösung entspricht oder geringfügig darüber liegt.

Bevorzugt ist die Menge des Dichteadditivs (D) in der mikronisierten Wachszusammensetzung (C) so gewählt, dass die Dichte der mikronisierten Wachszusammensetzung (C) bei 20 °C im Bereich von 0,94 bis 1,20 g/cm$^3$, bevorzugt von 0,96 bis 1,10 g/cm$^3$, mehr bevorzugt von 0,98 bis 1,06 g/cm$^3$, mehr bevorzugt von 1,00 bis 1,04 g/cm$^3$ liegt.

Das Dichteadditiv (D) kann ein organisches Additiv oder ein anorganisches Additiv sein.

Organische Dichteadditive (D) können beispielsweise eine Dichte im Bereich von 1,1 bis 2,8 g/cm$^3$, bevorzugt 1,3 bis 2,5 aufweisen. Geeignete organische Dichteadditive (D) umfassen unter anderem halogenierte organische Polymere wie Polyvinylchlorid, Polyvinylidenchlorid, Polyvinylfluorid, Polyvinylidenfluorid und Polytetrafluorethylen (PTFE), Polyamide und Aramide und Polysaccharide oder Polyglucoside wie Zellulose, Hemizellulose, Stärke, Chitin, Chitosan und ähnliche. Bevorzugte organische Dichteadditive (D) sind PTFE-Wachse und Zellulose, mehr bevorzugt PTFE-Wachse.

Anorganische Dichteadditive (D) können beispielsweise eine Dichte im Bereich von 2,0 bis 10,0 g/cm$^3$, bevorzugt von 2,1 bis 5,0 g/cm$^3$, mehr bevorzugt 2,5 bis 4,8 g/cm$^3$ aufweisen. Geeignete anorganische Dichteadditive (D) umfassen unter anderem anorganische Salze und Mineralien, die im Wesentlichen unlöslich sind. Beispiele geeigneter anorganischer Dichteadditive (D) sind Siliziumdioxid, Magnesiumcarbonat, Magnesiumfluorid, Calciumcarbonat, Calciumsulfat, Calciumfluorid, Strontiumcarbonat, Strontiumsulfat, Strontiumfluorid, Bariumcarbonat, Bariumsulfat und Bariumfluorid. Bevorzugte anorganische Dichteadditive (D) sind schwerlösliche Salze der Erdalkalimetalle, mehr bevorzugt Calciumsulfat, Calciumcarbonat, Bariumsulfat oder Bariumcarbonat, mehr bevorzugt Calciumcarbonat.

Optionale weitere Additive (A)

Optional kann die mikronisierte Wachszusammensetzung (C) mindestens ein weiteres Additiv (A) umfassen, das sich von dem mindestens einen Wachs (W), dem mindestens einen Emulgator (E) und dem mindestens einen Dichteadditiv (D) unterscheidet.

Weitere Additive (A) können beliebige Additive sein, die die Dispergierbarkeit der mikronisierten Wachszusammensetzung (C) in Wasser nicht wesentlich beeinflussen. Beispielsweise können weitere Additive (A) übliche Wachsadditive umfassen, die die Stabilität der Wachse gegenüber äußeren Einflüssen erhöhen.

Geeignete weitere Additive (A) umfassen beispielsweise Antioxidantien, UV-Stabilisatoren, thermische Stabilisatoren, Weichmacher, Benetzungshilfsmittel, Entschäumer, Verarbeitungshilfsmittel, Thixotropiemittel, Geliermittel, Verdickungsmittel, Trennmittel, Rieselhilfen, Duftstoffe, antimikrobielle Mittel, Farbstoffe und Pigmente. Auch Lösungsmittelreste, z.B. Wasser, zählen im vorliegenden Kontext zu den weiteren Additiven (A). Diese können beispielsweise enthalten sein, wenn der mindestens eine Emulgator (E) oder ein anderes Additiv (A) in gelöster Form eingesetzt wird.

Wenn vorhanden, werden die weiteren Additive (A) in für diese Additive üblichen Mengen eingesetzt. Zum Beispiel können die weiteren Additive (A) in einer Gesamtmenge von 0,01 bis 50 Gew.-%, bevorzugt 0,05 bis 45 Gew.-%, mehr bevorzugt 0,1 bis 38 Gew.-%, mehr bevorzugt 0,1 bis 30 Gew.-%, mehr bevorzugt 0,1 bis 26 Gew.-%, bezogen auf das Gewicht der mikronisierten Wachszusammensetzung (C) enthalten sein.

Verfahren zur Herstellung der Mikronisierten Wachszusammensetzung (C)

Die mikronisierte Wachszusammensetzung (C) wird durch Trockenzerkleinern des mindestens einen Wachses (W) in Anwesenheit des mindestens eines Emulgators (E) erhalten.

Wenn vorhanden, können das optionale Dichteadditiv (D) und/oder das optionale weitere Additiv (A) während der Trockenzerkleinerung ebenfalls anwesend sein, oder erst nach der Trockenzerkleinerung der mikronisierten Wachszusammensetzung beigemischt werden. Bevorzugt ist mindestens das optionale Dichteadditiv (D), mehr bevorzugt auch

**EP 4 577 594 B1**

das optionale weitere Additiv (A) bei der Trockenzerkleinerung des Wachses (W) anwesend.

Bei der Trockenzerkleinerung des mindestens einen Wachses (W) kann der mindestens eine Emulgator (E) in fester, flüssiger oder gelöster Form vorliegen. Wenn der Emulgator in fester Form vorliegt, wird das Wachs (W) typischerweise zusammen mit dem Emulgator (E) trocken vermischt und im Anschluss zusammen mit diesem zerkleinert oder der feste Emulgator (E) wird über eine volumetrische oder gravimetrische Dosierung in den Mahlraum zudosiert, während das Wachs (W) vermahlen wird.

Bevorzugt liegt der mindestens eine Emulgator (E) bei der Trockenzerkleinerung des mindestens einen Waches (W) jedoch in flüssiger oder gelöster Form vor. Dies führt oft zu einer noch besseren Dispergierbarkeit der resultierenden mikronisierten Wachszusammensetzung (C).

Dies bedeutet, dass die Zufuhr des Emulgators (E) und die Trockenzerkleinerung des Wachses (W) in Anwesenheit des Emulgators (E) bevorzugt bei einer Temperatur stattfindet, die die Schmelztemperatur des Emulgators (E) übersteigt, wenn der Emulgator (E) nicht in gelöster Form vorliegt.

Entsprechend kann die Zufuhr und Trockenzerkleinerung bei Raumtemperatur stattfinden, wenn der Emulgator bei Raumtemperatur flüssig ist, wie es bei vielen nichtionischen Tensiden der Fall ist. Bei Emulgatoren, die bei Raumtemperatur fest sind, jedoch durch Schmelzen in den flüssigen Aggregatzustand überführt werden können, kann die Trockenzerkleinerung des Wachses (W) bevorzugt bei einer entsprechend höheren Temperatur stattfinden.

Bevorzugt liegt die Schmelztemperatur des Emulgators (E) in diesen Fällen mindestens 10 °C unter der Schmelztemperatur des Wachses (W). Andernfalls kann ein teilweises Erweichen/Schmelzen des Wachses (W) den Trockenzerkleinerungsprozess beeinträchtigen.

Alternativ kann der Emulgator (E) auch in gelöster Form, z.B. in wässriger Lösung vorliegen. Dies ist besonders bei Emulgatoren (E) sinnvoll, die einen hohen Schmelzpunkt haben und daher nicht in flüssiger Form bereitgestellt werden können, ohne dass das Wachs (W) ebenfalls geschmolzen wird, oder die sich thermisch zersetzen, bevor sie in den flüssigen Aggregatzustand überführt werden können. Dies ist bei manchen ionischen Tensiden der Fall.

Ebenfalls kann die Bereitstellung des Emulgators (E) in gelöster Form vorteilhaft sein, da hierdurch sich der Emulgator (E) besser verteilen lässt. Gleichzeitig können bei der Bereitstellung des Emulgators (E) in gelöster Form auch die optionalen Dichteadditive (D) und die optionalen weiteren Additive (A) in der gleichen Lösung dispergiert oder gelöst bereitgestellt werden. Bevorzugt ist der Emulgator (E) ein bei Raumtemperatur flüssiger Emulgator und/oder wird in wässriger Lösung bereitgestellt.

Bevorzugt wird der Emulgator (E) beim Zerkleinern des Wachses (W) zu dem Wachs (W) in flüssiger oder gelöster Form gesprüht.

Das Trockenzerkleinern kann durch beliebige Zerkleinerungsmethoden erfolgen, die eine Trockenzerkleinerung von Wachs in Anwesenheit eines Emulgators (E), bevorzugt in flüssiger oder gelöster Form erlauben. Bevorzugt hat die mikronisierte Wachszusammensetzung (C) nach der Trockenzerkleinerung einen Volumen-Medianwert $D_{50}$ der Teilchengrößen, (gemessen in Wasser mit der Vorrichtung Mastersizer 3000 der Firma Malvern Panalytical) im Bereich von 3 bis 30 $\mu$m, mehr bevorzugt von 4 bis 20 $\mu$m, mehr bevorzugt von 5 bis 15 $\mu$m, mehr bevorzugt von 7 bis 10 $\mu$m. Ferner haben mindestens 99 Vol.-% der Teilchen der mikronisierten Wachszusammensetzung (C) nach der Trockenzerkleinerung eine Größe von höchstens 100 $\mu$m, mehr bevorzugt höchstens 80 $\mu$m, mehr bevorzugt höchstens 60 $\mu$m, mehr bevorzugt höchstens 30 $\mu$m.

Um solche Teilchengrößen zu erhalten kann eine geeignete Mühle verwendet werden. Solche Mühlen sind beispielsweise Prall-, Hammer-, Stift- und Strahlmühlen.

Bevorzugt kann eine mechanische Prallmühle oder eine Luftstrahlmühle verwendet werden, die mit einem Sichter ausgestattet ist. Geeignete Mühlen und Sichter werden beispielsweise von der Firma Hosokawa Alpine AG vertrieben. Der Emulgator (E) kann beispielsweise über eine Düse in den Mahlraum eingesprüht werden (in flüssiger oder gelöster Form), oder zusammen mit dem Wachs (W) vorgelegt werden. Bevorzugt wird der Emulgator (E) in flüssiger oder gelöster Form in den Mahlraum eingesprüht.

Bevorzugt werden bei der Trockenzerkleinerung folgende Mengen an Komponenten eingesetzt:

a) 40 bis 99,9 Gew.-%, bevorzugt 50 bis 99 Gew.-%, mehr bevorzugt 60 bis 98,8 Gew.-%, mehr bevorzugt 65 bis 98,5 Gew.-%, mehr bevorzugt 70 bis 98 Gew.-%, bezogen auf das Gesamtgewicht der eingesetzten Komponenten, des mindestens einen Wachses (W);

b) 0,1 bis 20 Gew.-%, bevorzugt 1 bis 15 Gew.-%, mehr bevorzugt 1,2 bis 8 Gew.-%, mehr bevorzugt 1,5 bis 5 Gew.-%, mehr bevorzugt 2 bis 4 Gew.-%, bezogen auf das Gesamtgewicht der eingesetzten Komponenten, des mindestens einen Emulgators (E);

c) optional 0 bis 59,9 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gesamtgewicht der eingesetzten Komponenten, des mindestens einen Dichteadditivs (D); und

d) optional 0 bis 50 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gesamtgewicht der eingesetzten Komponenten, des mindestens einen weiteren Additivs (A).

Vorzugsweise beträgt die Summe von a), b), c) und d) 100 Gew.-%, sodass keine weiteren Komponenten eingesetzt werden.

Wenn das mindestens eine Dichteadditiv (D) eingesetzt wird, beträgt dessen Menge typischerweise mindestens 0,1 Gew.-%, bevorzugt mindestens 1 Gew.-%, mehr bevorzugt mindestens 5 Gew.-%, bezogen auf das Gesamtgewicht der eingesetzten Komponenten. In diesen Fällen wird die Obergrenze der eingesetzten Menge an Wachs (W) entsprechend angepasst, damit die Summe der Komponenten 100 Gew.-% nicht übersteigt.

Das Dichteadditiv (D) kann entweder in den Mahlraum volumetrisch oder gravimetrisch co-dosiert werden um die entsprechende Zusammensetzung für die Wachszusammensetzung (C) zu erreichen oder mit dem Wachs gravimetrisch vorgemischt werden.

Wenn das mindestens eine weitere Additiv (A) eingesetzt wird, beträgt dessen Menge typischerweise mindestens 0,01 Gew.-%, bevorzugt mindestens 0,1 Gew.-%, mehr bevorzugt mindestens 1 Gew.-%, bezogen auf das Gesamtgewicht der eingesetzten Komponenten. In diesen Fällen wird die Obergrenze der eingesetzten Menge an Wachs (W) entsprechend angepasst, damit die Summe der Komponenten 100 Gew.-% nicht übersteigt.

Die erfindungsgemäße Wachszusammensetzung (C) kann zur Herstellung einer wässrigen Formulierung verwendet werden.

Es wurde überraschend gefunden, dass die erfindungsgemäße Wachszusammensetzung (C) deutlich schneller in Wasser oder wasserbasierte Lacke und wasserbasierte Farben dispergiert werden kann, als ähnliche Zusammensetzungen, bei denen das Wachs (W) erst nach Mikronisierung mit einem Emulgator (E) vermischt wird. Ohne sich an eine Theorie binden zu wollen, wird vermutet, dass durch das Trockenzerkleinern des Wachses (W) in Anwesenheit des Emulgators (E) die Oberfläche der Wachsteilchen gleichmäßiger benetzt wird, als es im Falle einer Vermischung nach der Mikronisierung der Fall ist, was die spätere Dispergierung in Wasser deutlich erleichtert und beschleunigt und zudem einen geringeren Einsatz von Emulgatoren in der erfindungsgemäßen Wachszusammensetzung (C) ermöglicht.

Das erfindungsgemäße Verfahren zur Herstellung einer wässrigen Formulierung umfasst die Schritte: i) Bereitstellen von Wasser, der erfindungsgemäßen mikronisierten Wachszusammensetzung (C), und optional weiterer Komponenten; ii) Vermischen der in Schritt i) bereitgestellten Komponenten.

Die Bereitstellung der erfindungsgemäßen mikronisierten Wachszusammensetzung (C) in Schritt i) kann zum Beispiel dadurch erfolgen, dass das mindestens eine Wachs (W) unmittelbar vor Schritt ii) in Anwesenheit des mindestens einen Emulgators (E), bevorzugt in flüssiger oder gelöster Form, und gegebenenfalls in Anwesenheit des mindestens einen Dichteadditivs (D) und/oder des mindestens einen weiteren Additivs (A) zerkleinert wird. Alternativ kann zwischen der Trockenzerkleinerung und der Vermischung in Schritt ii) eine Lagerung der mikronisierten Wachszusammensetzung (C) erfolgen.

Die Mengen an mikronisierter Wachszusammensetzung (C), Wasser und optional weiterer Komponenten, und gegebenenfalls die Art der weiteren Komponenten, werden bei dem Verfahren gemäß der gewünschten Konzentration in der wässrigen Formulierung gewählt, die weiter unten näher beschrieben ist.

Die Vermischung kann durch beliebige Verfahren erfolgen. Zum Beispiel kann die Vermischung durch Rühren, Schütteln oder sogar Schwenken der Komponenten erfolgen. Auch andere Verfahren zur Vermischung können angewandt werden, z.B. Vermischung unter Verwendung statischer Mischer, durch Erzeugung von Turbulenzen durch Durchleiten von Gasen, oder durch Ultraschall.

Rühren kann beispielsweise mithilfe eines mechanischen Rührwerks wie einem KPG-Rührer, Handmixer, Stabmixer, Standmixer, Dispergierer, Flügelrührer, Magnetrührer oder händisch (z.B. mit einem Spatel oder Löffel) erfolgen. Schütteln und Schwenken kann ebenfalls händisch oder durch automatisierte Verfahren erfolgen, wobei Schwenken im vorliegenden Kontext eine sanftere Form des Schüttelns darstellt, bei der eine Vermischung mit der Gasphase unter Blasenbildung möglichst vermieden wird, indem beispielsweise vertikale Bewegungen des Gefäßes oder der zu vermischenden Komponenten möglichst vermieden werden.

Geeignete Vorrichtungen zum Schütteln und/oder Schwenken sind beispielsweise Schüttler, Rotatoren, Flaschenrollen, Taumelmischer und Vibrationsvorrichtungen.

Bevorzugt erfolgt die Vermischung durch Rühren oder Schütteln, mehr bevorzugt durch Rühren.

Die erfindungsgemäße wässrige Formulierung umfasst Wasser und 0,01 bis 60 Gew.-%, bevorzugt 0,1 bis 50 Gew.-%, mehr bevorzugt 0,2 bis 4 Gew.-% oder 30 bis 40 Gew.-%, mehr bevorzugt 0,3 bis 3 Gew.-% oder 32 bis 38 Gew.-%, bezogen auf das Gesamtgewicht der wässrigen Formulierung, an mikronisierter Wachszusammensetzung (C), wobei die mikronisierte Wachszusammensetzung (C) in dem Wasser dispergiert ist.

Zusätzlich kann die wässrige Formulierung auch weitere Komponenten enthalten. Diese weiteren Komponenten können beliebig gewählt werden, und werden typischerweise in Abhängigkeit von der End-Anwendung der wässrigen Formulierung gewählt. Die weiteren Komponenten können hierbei auch einzelne Inhaltsstoffe der mikronisierten Wachszusammensetzung (C) in zusätzlichen Mengen umfassen. Beispielsweise können die weiteren Komponenten zusätzliche Emulgatoren (E), Dichteadditive (D) und/oder weitere Additive (A) umfassen, auch wenn diese bereits in der mikronisierten Wachszusammensetzung (C) enthalten sind.

Beispielsweise können die weiteren Komponenten Stabilisatoren wie Antioxidantien, UV-Stablisisatoren und thermische Stabilisatoren, Weichmacher, Benetzungshilfsmittel, Entschäumer, Verarbeitungshilfsmittel, Thixotropiemittel, Geliermittel, Verdickungsmittel, Duftstoffe, antimikrobielle Mittel, Farbstoffe und Pigmente, Polymere, Filmbildner, Füllstoffe, Harze und/oder Härtungsbeschleuniger enthalten.

Die erfindungsgemäße wässrige Formulierung kann ein wässriges Konzentrat sein oder bereits ein gebrauchsfertiges wässriges Produkt, z.B. ein wasserbasierter Lack oder eine wasserbasierte Druckfarbe sein. Bevorzugt ist die wässrige Formulierung ein wässriges Wachskonzentrat, eine wasserbasierte Flexographie-Druckfarbe, ein wasserbasierter Polyurethanlack oder ein wasserbasierter Acryllack.

Als Wachskonzentrat umfasst die wässrige Formulierung typischerweise 20 bis 60 Gew.-%, bevorzugt 25 bis 50 Gew.-%, mehr bevorzugt 30 bis 40 Gew.-%, mehr bevorzugt 32 bis 38 Gew.-%, bezogen auf das Gesamtgewicht der wässrigen Formulierung, an mikronisierter Wachszusammensetzung (C).

Bevorzugt umfasst das Wachskonzentrat zusätzlich mindestens ein Verdickungsmittel, bevorzugt ausgewählt aus Methylcellulose, Xanthan, Gelatine und Agar, mehr bevorzugt Methylcellulose. Geeignete Mengen an Verdickungsmittel liegen typischerweise zwischen 0,01 und 20 Gew.-%, bevorzugt zwischen 0,05 und 10 Gew.-%, mehr bevorzugt zwischen 0,1 und 1 Gew.-%, bezogen auf das Gesamtgewicht der wässrigen Formulierung.

In einer Ausführungsform ist die wässrige Formulierung ein Wachskonzentrat umfassend Wasser und 30 bis 40 Gew.-%, bevorzugt 32 bis 38 Gew.-%, mehr bevorzugt 34 bis 36 Gew.-%, bezogen auf das Gesamtgewicht der wässrigen Formulierung, an mikronisierter Wachszusammensetzung (C), und ein Verdickungsmittel, bevorzugt ausgewählt aus Methylcellulose, Xanthan, Gelatine und Agar, mehr bevorzugt Methylcellulose. Ein Wachskonzentrat für den universellen Einsatz kann beispielsweise aus der mikronisierten Wachszusammensetzung (C), Wasser und Verdickungsmittel bestehen, und erst für die Herstellung eines gebrauchsfertigen wässrigen Produkts mit weiteren Komponenten wie Duftstoffen, Farbmitteln etc. versetzt werden.

Als gebrauchsfertige wässrige Produkte, z.B. als wasserbasierte Lacke oder wasserbasierte Druckfarben, umfasst die wässrige Formulierung typischerweise 0,01 bis 20 Gew.-%, bevorzugt 0,05 bis 15 Gew.-%, mehr bevorzugt 0,1 bis 10 Gew.-%, mehr bevorzugt 0,2 bis 4 Gew.-%, mehr bevorzugt 0,3 bis 3 Gew.-%, bezogen auf das Gesamtgewicht der wässrigen Formulierung, an mikronisierter Wachszusammensetzung (C). Zusätzlich umfassen solche gebrauchsfertigen wässrigen Produkte typischerweise weitere Komponenten, die für die jeweilige Art von Produkt üblich sind.

Gebrauchsfertige wässrige Produkte wie Lacke und Druckfarben können direkt aus der mikronisierten Wachszusammensetzung (C) durch Vermischen mit Wasser und den weiteren Komponenten hergestellt werden, oder aus einem Wachskonzentrat, durch Vermischung mit den weiteren Komponenten erhalten werden. Ebenso kann das Wachskonzentrat oder die mikronisierte Wachszusammensetzung (C) direkt in einen Lack oder eine Druckfarbe eingemischt werden, um beispielsweise die Kratzfestigkeit eines fertigen Lacks oder einer Druckfarbe zu verbessern.

Die Erfindung wird durch die nachfolgenden Beispiele und Ansprüche näher beschrieben.

Beispiele

Verwendete Materialien:

W1: Licowax® PE 130 GR (Clariant SE): HDPE-Wachs Granulat mit ca. 7 mm Granulatdurchmesser, einem Tropfpunkt von 127 bis 132 °C, einer Säurezahl von 0 mg KOH/g und einer Dichte von 0,96 bis 0,98 g/cm$^3$.

W2: Licocene® PE 4201 GR (Clariant SE): HDPE-Wachs Granulat mit ca. 5 mm Granulatdurchmesser, einem Tropfpunkt von 125 bis 130 °C, einer Säurezahl von 0 mg KOH/g und einer Dichte von 0,96 bis 0,98 g/cm$^3$.

W3: mikronisiertes HDPE-Wachs mit einem D50-Wert (Volumen-Median) von 7,5 bis 9,5 $\mu$m, einem Tropfpunkt von 127 bis 132 °C, einer Säurezahl von 0 mg KOH/g und einer Dichte von 0,96 bis 0,98 g/cm$^3$, hergestellt durch Trockenzerkleinern von W1 wie in Herstellungsbeispiel 1 (ohne Emulgator und Dichteadditiv) beschrieben.

W4: Ceridust® 3715 (Clariant SE): mikronisiertes oxidiertes HDPE-Wachs mit einem D50-Wert von 7,5 bis 9,5 $\mu$m, einem Tropfpunkt von 122 bis 127 °C, einer Säurezahl von 2-5 mg KOH/g und einer Dichte von 0,96 bis 0,98 g/cm$^3$.

W5: Luwax® AF 30 (BASF SE): mikronisiertes HDPE-Wachs mit einem D50-Wert von ca. 6,5 $\mu$m, einem Tropfpunkt von 112 bis 120 °C, einer Säurezahl von 1 bis 3,6 mg KOH/g und einer Dichte von 0,94 bis 0,96 g/cm$^3$.

W6: ACumist® A12 (Honeywell, Inc.): mikronisiertes oxidiertes HDPE-Wachs mit einem D50-Wert von 10 bis 13 $\mu$m, einem Tropfpunkt von ca. 137 °C, einer Säurezahl von 26 bis 40 mg KOH/g und einer Dichte von ca. 0.99 g/cm$^3$.

W7: Ceridust® 1060 Vita (Clariant SE): mikronisiertes, oxidiertes Reiskleiewachs mit einem D50-Wert von 11-14 $\mu$m, einem Tropfpunkt von 75 - 80 °C, einer Säurezahl von 45 - 55 mg KOH/g und einer Dichte von ca. 0.99 g/cm$^3$

W8: Licocare RBW 102 FL Vita (Clariant SE): oxidierte Reiskleiewachsflakes mit ca. 2-5 mm Flakedurchmesser, einem Tropfpunkt von 75 - 80 °C, einer Säurezahl von 45 - 55 mg KOH/g und einer Dichte von ca. 0,99 g/cm$^3$

W9: Ceridust 1041 Vita (Clariant SE): mikronisiertes, oxidiertes Reiskleiewachs mit einem D50-Wert von 6 - 9 $\mu$m, einem Tropfpunkt von 75 - 82 °C, einer Säurezahl von 15 - 25 mg KOH/g und einer Dichte von ca. 0,99 g/cm$^3$

E1: nichtionischer Emulgator, Fettalkohol-Polyglycol-Ether mit einem HLB-Wert von ca. 11.

E2: pflanzenbasierter nichtionischer Emulgator, Palmfettalkohol-Polyglycol-Ether mit einem HLB-Wert von ca. 10 bis 12.

D1: Bariumsulfat-Pulver mit D50-Wert von ca. 5 $\mu$m; Dichte 4,5 g/cm$^3$.

D2: Niedrigmolekulares PTFE-Wachs mit mittlerer Teilchengröße (bestimmt nach ASTM D4894) von 4 $\mu$m; Dichte: ca. 2,2 g/cm$^3$.

D3: Mischung aus Polysacchariden; Dichte: ca. 1,5 g/cm$^3$.

Die Teilchengrößenverteilungen wurden mittels Laserbeugung (Mastersizer 3000 der Firma Malvern Panalytical, gemessen in Wasser) überprüft. Hierfür wurde eine Probe der zu analysierenden Substanz mit einem kleinen Messlöffel entnommen (ca. 150 mg) und in ein 50 mL Becherglas gegeben. 0,75 mL einer 5%igen wässrigen Lösung eines Emulgators (Nonylphenol-Polyglycol-Ether mit 9 Ethoxy-Einheiten) wurden hinzugegeben und 3 Tropfen 2-Propanol wurden mittels einer Kunststoffpipette (3 mL mit 0,5 mL Graduierung) hinzugetropft. Die Mischung wurde mit 20 mL vollentsalztem Wasser aufgefüllt und mit einem Flügelrührer 3 Minuten bei 1000 U/min gerührt, ohne die Wände des Becherglases mit dem Rührer zu berühren. Nach dem Rühren wurde die Probe für 3 Minuten in ein gekühltes Ultraschallbad gestellt, und im Anschluss sofort mittels Laserbeugung untersucht. Die Messung erfolgte gemäß der Betriebsanleitung für das verwendete Gerät (Mastersizer 3000 der Firma Malvern Panalytical).

Herstellungsbeispiel 1 (erfindungsgemäß):

Die Trockenzerkleinerung von Wachs (W1 (Licowax® PE 130 granules), W8 (Licocare RBW 102 FL VITA)) für die Herstellung der erfindungsgemäßen mikronisierten Wachszusammensetzung (C) wurde mithilfe einer Zirkoplex-Sichtermühle ZPS 200 (Hosokawa Alpine AG) mit Sichterrad oder mithilfe einer Fließbett-Gegenstrahlmühle AFG 200 (Hosokawa Alpine AG) mit integriertem Sichter durchgeführt.

Die Trockenzerkleinerung erfolgte zunächst ohne Emulgator, um die gerätespezifischen Parameter einzustellen, sodass mikronisierte Wachse mit D50-Werten der Teilchengrößenverteilung im Bereich von 5 bis 15 $\mu$m, D90-Werten im Bereich von 10 bis 40 $\mu$m, und D99-Werten im Bereich von 15 bis 70 $\mu$m erreicht wurden.

Das Mahlgut umfasste das Wachs (W) und, sofern vorhanden, das Dichteadditiv (D) als feste Mischung. Die Teilchengrößenverteilungen wurden wie oben beschrieben mittels Laserbeugung (Mastersizer 3000 der Firma Malvern Panalytical, gemessen in Wasser) überprüft. Nach Erreichen der Teilchengrößenverteilung im angegebenen Bereich wurden die Parameter konstant gehalten.

Um die Wachzusammensetzung (C) herzustellen, wurde anschließend während der Vermahlung der Emulgator über einen Zeitraum von 5 bis 40 Minuten von der Seite auf die Mahlscheibe (ZPS 200) oder direkt in den Mahlraum (AFG 200) gesprüht.

Für die Herstellung des mikronisierten Wachses W3 wurde das Verfahren entsprechend ohne Dichteadditiv (D) und ohne Zugabe eines Emulgators durchgeführt.

Die Bedingungen und Ergebnisse der Trockenzerkleinerung sind in Tabelle 1 (ZPS 200) und Tabelle 2 (AFG200) dargestellt.

Tabelle 1

| Zusammensetzung (C) | C1 | C2 | C3 | C4 | C5 | C6 | C7 |
|---|---|---|---|---|---|---|---|
| Wachs (W) | W1 | W1 | W1 | W1 | W1 | W1 | W1 |
| Emulgator (E) | E1 | E1 | E1 | E1 | E1 | E1 | E1 |
| Anteil (E) [Gew.-%]* | 1,2 | 2,7 | 3,2 | 3,3 | 2,5 | 0,9 | 4,1 |
| Dichte [g/cm$^3$] | 0,97 | 0,97 | 0,97 | 0,976 | 0,97 | 0,97 | 0,97 |
| D50 [$\mu$m] | 8,48 | 8,91 | 9,14 | 8,87 | 9,28 | 9,37 | 14,4 |
| D90 [$\mu$m] | 17,5 | 17,9 | 18,5 | 17,4 | 18,4 | 18,2 | 35,7 |
| D99 [$\mu$m] | 26,4 | 26,5 | 28,5 | 25,9 | 27,2 | 26,4 | 60,0 |
| *Eingesetzte Menge, bezogen auf das Gewicht aller eingesetzten Komponenten | | | | | | | |

Tabelle 2

| | C8 | C9 | C10 | C11 | C12 | C13 |
|---|---|---|---|---|---|---|
| Wachs (W) | W2 | W1 | W1 | W1 | W1 | W8 |
| Emulgator (E) | E1 | E1 | E1 | E1 | E2 | E1 |
| Anteil (E) [Gew.-%]* | 2,4 | 3,4 | 3,4 | 4 | 19,1 | 3,6 |
| Dichteadditiv (D) | | D1 | D2 | D3 | | |
| Anteil (D) [Gew.-%]* | | 7 | 7,8 | 17 | | |
| Dichte [g/cm³] | 0,97 | 1,003 | 1,018 | 1,017 | 0,98 | 0,987 |
| D50 [μm] | 9,4 | 8,6 | 9,63 | 6,68 | 5,5 | 8,4 |
| D90 [μm] | 24,5 | 24,6 | 23,2 | 14,9 | 11 | 16,3 |
| D99 [μm] | 44,2 | 48,2 | 38,6 | 24,4 | 16,2 | 28,3 |
| *Eingesetzte Menge, bezogen auf das Gewicht aller eingesetzten Komponenten | | | | | | |

Herstellungsbeispiel 2 (Vergleich):

Das mikronisierte Wachs W3 wurde mithilfe eines Hausschild SpeedMixer® DAC 150 (Hausschild GmbH & Co. KG) mit 3 Gew.-% (Zusammensetzung V1) oder mit 18 Gew.-% (Zusammensetzung V2) des Emulgators E1 trocken vermengt (bei 2000 RPM).

Beispiel 1 (Fließ-/Rieselfähigkeit)

Ein Fallrohr (offener Glaszylinder; 20 cm Höhe, 1,5 cm Durchmesser wurde auf einer dunklen Prüfmatte aufgesetzt, sodass die untere Öffnung von der Prüfmatte verschlossen war. 2,5 g der jeweiligen mikronisierten Wachszusammensetzung (Tabelle 3) wurden von oben in das Fallrohr gefüllt. Das Fallrohr wurde auf einen Abstand von ca. 2 cm von der Matte angehoben, damit das Wachspulver hinausfallen und ein Schüttkegel entstehen konnte. Der Durchmesser des entstandenen Schüttkegels wurde mit einem Lineal gemessen. Ein flacherer, breiterer Schüttkegel impliziert bessere Fließ-/Rieselfähigkeit.

Die Versuche zeigen zum einen, dass bei einem niedrigen Emulgatorgehalt die Fließ-/Rieselfähigkeit besser ist, zum anderen, dass beim Trockenzerkleinern des Wachses in Anwesenheit des Emulgators eine bessere Fließ-/Rieselfähigkeit erzielt wird, als wenn der Emulgator erst nach der Mikronisierung mit dem mikronisierten Wachs vermengt wird.

Tabelle 3

| Zusammensetzung | V1 | V2 | C4 |
|---|---|---|---|
| Wachs (W) | W3 | W3 | W1 |
| D50 [μm] | 7,5-9,5 | 7,5-9,5 | 8,87 |
| Emulgator (E) | E1 | E1 | E1 |
| Emulgatorgehalt [Gew.-%] | 3 | 18 | 3 |
| Schüttkegeldurchmesser [mm] | ca. 45 | ca. 40 | ca. 50 |

Beispiel 2 (Dispergierbarkeit)

35 Gew.-% einer mikronisierten Wachszusammensetzung wurden in einer wässrigen Lösung enthaltend 64,7 Gew.-% vollentsalztes Wasser, 0,1 Gew.-% Verdickungsmittel (Xanthan), 0,1 Gew.-% Entschäumer (Tego® Foamex 810 der Firma Evonik Industries AG) und 0,1 Gew.-% antimikrobielles Mittel (Proxel™ GXL der Firma Arch Chemicals, Inc.) dispergiert (15 min bei 1500 RPM) und die Dauer der Dispersionsstabilität wurde beobachtet.

Stabile Dispersionen mit Wachs W3 konnten nur auf übliche Weise hergestellt werden, indem erst der Emulgator E1 in der wässrigen Lösung vorgelegt, und das mikronisierte Wachs W3 erst danach eingerührt wurde. Erfindungsgemäße mikronisierte Wachszusammensetzung C1-C12 konnten hingegen direkt in die wässrige Lösung eingerührt werden, ohne dass zusätzlich Emulgator vorgelegt wurde. Die Dispersionsstabilitäten bei Raumtemperatur sind in Tabelle 4 dargestellt.

Tabelle 4 (+: stabil; -: Trennung)

| | E1/E2 [Gew.-%] | D1/D2/D3 [Gew.-%] | Tag 0 | Tag 1 | Tag 3 | Tag 7 | Tag 22 | Tag 24 |
|---|---|---|---|---|---|---|---|---|
| W3 | 0 (E1) | 0 | - | - | - | - | - | - |
| C6 | 0,9 (E1) | 0 | + | - | - | - | - | - |
| C1 | 1,2 (E1) | 0 | + | - | - | - | - | - |
| C8 | 2,4 (E1) | 0 | + | + | + | + | + | + |
| C5 | 2,5 (E1) | 0 | + | + | + | + | + | + |
| C2 | 2,7 (E1) | 0 | + | + | + | + | + | + |
| C3 | 3,2 (E1) | 0 | + | + | + | + | + | + |
| C4 | 3,3 (E1) | 0 | + | + | + | + | + | + |
| C7 | 4,1 (E1) | 0 | + | + | + | + | + | + |
| C9 | 3,4 (E1) | 7 (D1) | + | + | + | + | + | + |
| C10 | 3,4 (E1) | 7,8 (D2) | + | + | + | + | + | + |
| C11 | 4 (E1) | 17 (D3) | + | + | + | + | + | + |
| C12 | 19,1 (E2) | 0 | + | + | + | + | + | + |

Ab einer Emulgatormenge von 2,5 Gew.-% konnten die erfindungsgemäßen mikronisierten Wachszusammensetzungen (C) auch innerhalb kurzer Zeit (< 2 min) durch Schütteln, händisches Umrühren oder Schwenken des jeweiligen Gefäßes in Wasser dispergiert werden.

Dispersionen enthaltend Zusammensetzungen C9 bis C11, die ein Dichteadditiv (D) enthielten, blieben länger stabil, und zeigten ein anderes Phasentrennverhalten nach langer Lagerung (die Feststoffe sind nicht auf der wässrigen Lösung aufgeschwommen, sondern aufgrund der erhöhten Dichte zu einem größeren Anteil unter die Wasseroberfläche gesunken). Hierdurch wurde auch die Wiederdispergierbarkeit im Falle einer Phasentrennung nach längerer Lagerung weiter begünstigt.

Beispiel 3 (Dispergierbarkeit im Vergleich zu polaren modifizierten Wachsen)

90 g vollentsalztes Wasser wurden in einem 250 mL Becherglas vorgelegt und 10 g der mikronisierten Wachszusammensetzung C4 oder eines der polaren Wachse W4, W6 oder W7 wurden auf die Wasseroberfläche gegeben. Anschließend wurde ein Flügelrührer soweit in das Wasser eingetaucht, dass der Abstand zum Becherglas-Boden wenige Millimeter betrug.

Der Rührvorgang mit 700 U/min wurde gestartet und nach 5 min beendet. Anschließend wurde der Flügelrührer nach oben gefahren und die Mischungen wurden beobachtet. Nach 2 Stunden wurde die Beobachtung beendet.

Bei der mikronisierten Wachszusammensetzung C4 wurde eine Benetzung des Feststoffs mit Wasser bereits vor Beginn des Rührens beobachtet. Bei den Wachsen W4, W6 und W7 schwamm das Wachs ohne sichtbare Benetzung auf.

Nach Beendigung des Rührvorgangs trennten sich die Mischungen bei Wachsen W4, W6 und W7 sofort vollständig und bildeten eine klare Wasserphase mit darauf aufschwimmendem Wachs. Die mikronisierte Wachszusammensetzung C4 bildete hingegen eine stabile und homogene Wachsdispersion, die auch nach 2 Stunden keine sichtbaren Veränderungen zeigte.

Beispiel 4 (wasserbasierter 1-Komponenten-Polyurethanlack)

Eine wässrige Formulierung wurde hergestellt, indem ein gebrauchsfertiger wasserbasierter 1-Komponenten-Polyurethanlack (z.B. Bona Mega der Firma Bona Vertriebsgesellschaft mbH) vorgelegt wurde und eine mikronisierte Wachszusammensetzung oder ein mikronisiertes Wachs langsam oder schnell zugegeben und mit einem Labor-Dispergierer (Dispermat® LC30 der Firma VMA-Getzmann GmbH) in den Lack innerhalb von 0.5 min bei 500 RPM und dann innerhalb von 1 min bei 1000 RPM eingerührt wurde (insgesamt 1,5 min).

Die Mischung wurde dann zwischen zwei Objektträgern (Glas) fixiert und die sichtbaren Wachs-Agglomerate wurden gezählt.

Die Ergebnisse sind in Tabelle 5 dargestellt.

Tabelle 5

| (W)/(C) | W3 | | W4 | | W5 | W6 | V1 | V2 | C7 | |
|---|---|---|---|---|---|---|---|---|---|---|
| Menge Lack [Gew.-%] | 98 | | 98 | | 98 | 98 | 98 | 98 | 98 | |
| Menge (W)/(C) [Gew.-%] | 2 | | 2 | | 2 | 2 | 2 | 2 | 2 | |
| Agglomerate | 200 | 240[a] | 129 | 142[a] | >114 | >137 | >200 | 98 | 20 | 15[a] |
| [a] schnelle Zugabe | | | | | | | | | | |

Tabelle 6

| (W)/(C) | W9 | | C13 | |
|---|---|---|---|---|
| Menge Lack [Gew.-%] | 98 | | 98 | |
| Menge (W)/(C) [Gew.-%] | 2 | | 2 | |
| Agglomerate | >300 | >300 [a] | 81 | 96 [a] |
| [a] schnelle Zugabe | | | | |

Erst bei deutlich höheren Rührgeschwindigkeiten und deutlich längeren Dispergierzeiten (20 min bei 2000 RPM) konnten bei Vergleichsformulierungen homogene Dispersionen mit < 50 Agglomeraten festgestellt werden.

Aus diesen Ergebnissen ist deutlich zu erkennen, dass die erfindungsgemäßen mikronisierten Wachszusammensetzungen (C) sich deutlich schneller und deutlich homogener in wasserbasierte Lacke einrühren lassen, als kommerziell erhältliche Wachse (unmodifiziert und modifiziert), und als Wachszusammensetzungen, in denen der Emulgator erst nach der Mikronisierung hinzugefügt wurde (V1, V2).

Ähnliche Ergebnisse sind auch bei 1-Komponenten-Acryllacken und Druckfarben für die Flexographie zu beobachten.

Beispiel 5 (Kratzbeständigkeit der Lacke)

1-Komponenten-Polyurethanlacke wurden wie in Beispiel 4 hergestellt, wobei 20 min bei 2000 RPM dispergiert wurde. Die Dispergierzeit von 20 min wurde gewählt, um auch die Vergleichsbeispiele W3 und W4 homogen einarbeiten zu können. Diese lagen bei kürzeren Dispergierzeiten als Agglomerate im Lack vor, sodass daraus hergestellte zu prüfende Lackoberflächen ebenfalls inhomogen und damit nicht prüfbar waren. Mit den erfindungsgemäßen Wachszusammensetzungen (C) ist die Prüfbarkeit auch nach Einrühren gemäß Beispiel 4 gegeben.

Die Formulierungen wurden auf eine Glasplatte aufgetragen, gehärtet und ihre Kratzbeständigkeit wurde untersucht.

Hierfür wurden die Härteprüfstab-Methode (DIN EN ISO 1518-1:2019) und der Schmiss-Test (ASTM 5178-21) durchgeführt. Die Ergebnisse sind in Tabelle 6 dargestellt.

Tabelle 7

| (W)/(C) | | W3 | W4 | C4 | C5 | C7 |
|---|---|---|---|---|---|---|
| Menge Lack [Gew.-%] | 100 | 98 | 98 | 98 | 98 | 98 |
| Menge (W)/(C) [Gew.-%] | 0 | 2 | 2 | 2 | 2 | 2 |
| Härteprüfstab [N] | 0,6 | 0,9 | 0,7 | 1,0 | 1,0 | 1,2 |
| Schmiss-Test [N] | 0,7 | 0,9 | 0,4 | 1,2 | 1,4 | 1,6 |

In ähnlicher Weise wurden 1-Komponenten-Acryllacke mit mikronisierten Wachsen/Wachszusammensetzungen hergestellt, und deren Kratzbeständigkeit nach DIN EN ISO 1518-1:2019 untersucht. Die Ergebnisse sind in Tabelle 7 dargestellt.

Tabelle 8

| (W)/(C) | | W3 | W4 | C2 | C3 | C4 | C5 | C7 |
|---|---|---|---|---|---|---|---|---|
| Menge Lack [Gew.-%] | 100 | 98 | 98 | 98 | 98 | 98 | 98 | 98 |

(fortgesetzt)

| (W)/(C) | | W3 | W4 | C2 | C3 | C4 | C5 | C7 |
|---|---|---|---|---|---|---|---|---|
| Menge (W)/(C) [Gew.-%] | 0 | 2 | 2 | 2 | 2 | 2 | 2 | 2 |
| Härteprüfstab [N] | 0,2 | 1,3 | 1,2 | 1,5 | 1,5 | 1,6 | 1,4 | 1,6 |
| Menge Lack [Gew.-%] | 100 | 96 | 96 | 96 | 96 | 96 | 96 | 96 |
| Menge (W)/(C) [Gew.-%] | 0 | 4 | 4 | 4 | 4 | 4 | 4 | 4 |
| Härteprüfstab [N] | 0,2 | 1,2 | 1,3 | 1,7 | 1,6 | 1,7 | 1,5 | 1,7 |

Aus den Ergebnissen ist zu erkennen, dass Lacke enthaltend die erfindungsgemäßen mikronisierten Wachszusammensetzungen (C) eine vergleichbare oder höhere Kratzbeständigkeit haben als Lacke mit kommerziell erhältlichen Wachsen (unmodifiziert und modifiziert).

**Patentansprüche**

1. Verfahren zur Herstellung einer mikronisierten Wachszusammensetzung (C), umfassend den Schritt:

   Trockenzerkleinern mindestens eines Wachses (W) in Anwesenheit mindestens eines Emulgators (E), und optional in Anwesenheit mindestens eines Dichteadditivs (D) mit einer Dichte bei 20 °C von > 1 g/cm$^3$, wobei das Dichteadditiv (D) in Wasser bei 20 °C im Wesentlichen unlöslich ist, und optional in Anwesenheit mindestens eines weiteren Additivs (A), das sich von dem mindestens einen Wachs (W), dem mindestens einen Emulgator (E) und dem mindestens einen Dichteadditiv (D) unterscheidet,
   wobei die Zerkleinerung mit weniger als 20 Gew.-% Wasser, bezogen auf die Menge an zur Zerkleinerung eingesetztem Wachs (W), stattfindet.

2. Verfahren gemäß Anspruch 1, wobei der mindestens eine Emulgator (E) bei der Zerkleinerung in flüssiger oder gelöster Form vorliegt.

3. Verfahren gemäß Anspruch 1 oder 2, wobei das Wachs (W) im Wesentlichen keine stabile Dispersion in Wasser bildet.

4. Verfahren gemäß einem der Ansprüche 1 bis 3, wobei das Dichteadditiv (D) ein organisches Additiv, bevorzugt ausgewählt aus halogenierten organischen Polymeren und Polysacchariden, mehr bevorzugt ausgewählt aus Polytetrafluorethylen-Wachs, Zellulose, Hemizellulose; und/oder ein anorganisches Additiv, bevorzugt ausgewählt aus Salzen, mehr bevorzugt ausgewählt aus Salzen der Erdalkalimetalle, mehr bevorzugt ausgewählt aus Calciumsulfat, Calciumcarbonat, Bariumsulfat und Bariumcarbonat, umfasst.

5. Verfahren gemäß einem der Ansprüche 1 bis 4, wobei bei der Zerkleinerung folgende Mengen an Komponenten eingesetzt werden:

   a) 40 bis 99,9 Gew.-%, bevorzugt 50 bis 99 Gew.-%, mehr bevorzugt 60 bis 98,8 Gew.-%, mehr bevorzugt 65 bis 98,5 Gew.-%, mehr bevorzugt 70 bis 98 Gew.-%, bezogen auf das Gewicht der eingesetzten Komponenten, des mindestens einen Wachses (W);
   b) 0,1 bis 20 Gew.-%, bevorzugt 1 bis 15 Gew.-%, mehr bevorzugt 1,2 bis 8 Gew.-%, mehr bevorzugt 1,5 bis 5 Gew.-%, mehr bevorzugt 2 bis 4 Gew.-%, bezogen auf das Gewicht der eingesetzten Komponenten, des mindestens einen Emulgators (E);
   c) optional 0 bis 59,9 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gewicht der eingesetzten Komponenten, des mindestens einen Dichteadditivs (D); und
   d) optional 0 bis 50 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gewicht der eingesetzten Komponenten, des mindestens einen weiteren Additivs (A).

6. Verfahren gemäß einem der Ansprüche 1 bis 5, wobei das Wachs (W) ausgewählt ist aus der Gruppe bestehend aus synthetischen organischen Wachsen, teilsynthetischen organischen Wachsen, Naturwachsen, und Mischungen davon, wobei das Wachs optional oxidiert oder auf sonstige Weise chemisch modifiziert sein kann, bevorzugt ausgewählt aus Polyolefin-Wachsen, Montanwachs, Reiskleiewachs, Bienenwachs, Sonnenblumenwachs, Maiswachs, Carnaubawachs, Fischer-Tropsch-Wachsen, Paraffinwachsen, Esterwachsen und Amidwachsen, mehr bevorzugt ausgewählt aus Polyethylen-Wachs, Polypropylen-Wachs, Poly(ethylen-co-propylen)-Wachs, Reiskleiewachs, Maiswachs und Sonnenblumenwachs, mehr bevorzugt ein HDPE-Wachs ist.

7. Verfahren gemäß einem der Ansprüche 1 bis 6, wobei der Emulgator (E) beim Zerkleinern des Wachses (W) zu dem Wachs (W) in flüssiger oder gelöster Form gesprüht wird.

8. Verfahren gemäß einem der Ansprüche 1 bis 7, wobei das Wachs (W) nicht oxidiert ist und nicht mit heteroatom-enthaltenden Gruppen gepfropft ist, und bevorzugt keine polaren Gruppen enthält.

9. Verfahren gemäß einem der Ansprüche 1 bis 8, wobei das Wachs (W) polare Gruppen enthält, bevorzugt oxidiert ist oder mit heteroatom-enthaltenden Gruppen gepfropft ist.

10. Verfahren gemäß einem der Ansprüche 1 bis 9, wobei die Menge an Dichteadditiv (D) so gewählt ist, dass die Dichte der mikronisierten Wachszusammensetzung (C) bei 20 °C im Bereich von 0,94 bis 1,20 $g/cm^3$, bevorzugt von 0,96 bis 1,10 $g/cm^3$, mehr bevorzugt von 0,98 bis 1,06 $g/cm^3$, mehr bevorzugt von 1,00 bis 1,04 $g/cm^3$ beträgt.

11. Verfahren gemäß einem der Ansprüche 1 bis 10, wobei das Wachs (W) auf einen Volumen-Medianwert D50 der Teilchengrößen im Bereich von 3 bis 30 $\mu$m, bevorzugt von 4 bis 20 $\mu$m, mehr bevorzugt von 5 bis 15 $\mu$m, mehr bevorzugt von 7 bis 10 $\mu$m zerkleinert wird.

12. Mikronisierte Wachszusammensetzung (C) umfassend (vorzugsweise bestehend aus):

a) mindestens ein Wachs (W);
b) mindestens einen Emulgator (E);
c) optional mindestens ein Dichteadditiv (D) mit einer Dichte bei 20 °C von > 1 $g/cm^3$, bevorzugt > 1,3 $g/cm^3$, wobei das Dichteadditiv (D) in Wasser bei 20 °C im Wesentlichen unlöslich ist; und
d) optional mindestens ein weiteres Additiv (A), das sich von dem mindestens einen Wachs (W), dem mindestens einen Emulgator (E) und dem mindestens einen Dichteadditiv (D) unterscheidet,
wobei die mikronisierte Wachszusammensetzung (C) durch das Verfahren gemäß einem beliebigen der Ansprüche 1 bis 11 erhalten wird, und
wobei der Wassergehalt der mikronisierten Wachszusammensetzung (C), gemessen mit einem Moisture Analyser HR73 der Fa. Mettler Toledo,unter 20 Gew.%, bevorzugt unter 10 Gew.-%, besonders bevorzugt unter 5 Gew.-%, bezogen auf das Gesamtgewicht der mikronisierten Wachszusammensetzung (C) liegt.

13. Mikronisierte Wachszusammensetzung (C) gemäß Anspruch 12, umfassend:

a) 40 bis 99,9 Gew.-%, bevorzugt 50 bis 99 Gew.-%, mehr bevorzugt 60 bis 98,8 Gew.-%, mehr bevorzugt 65 bis 98,5 Gew.-%, mehr bevorzugt 70 bis 98 Gew.-%, bezogen auf das Gewicht der mikronisierten Wachszusammensetzung (C), des mindestens einen Wachses (W);
b) 0,1 bis 20 Gew.-%, bevorzugt 1 bis 15 Gew.-%, mehr bevorzugt 1,2 bis 8 Gew.-%, mehr bevorzugt 1,5 bis 5 Gew.-%, mehr bevorzugt 2 bis 4 Gew.-%, bezogen auf das Gewicht der mikronisierten Wachszusammensetzung (C), des mindestens einen Emulgators (E);
c) optional 0 bis 59,9 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gewicht der mikronisierten Wachszusammensetzung (C), des mindestens einen Dichteadditivs (D); und
d) optional 0 bis 50 Gew.-%, bevorzugt 0 bis 45 Gew.-%, mehr bevorzugt 0 bis 38 Gew.-%, mehr bevorzugt 0 bis 30 Gew.-%, mehr bevorzugt 0 bis 26 Gew.-%, bezogen auf das Gewicht der mikronisierten Wachszusammensetzung (C), des mindestens einen weiteren Additivs (A).

14. Verfahren zur Herstellung einer wässrigen Formulierung, umfassend die Schritte:

i) Bereitstellen von Wasser, der mikronisierten Wachszusammensetzung (C) gemäß einem der Ansprüche 12 bis 13, und optional weiterer Komponenten;
ii) Vermischen der in Schritt i) bereitgestellten Komponenten, vorzugsweise durch Rühren, Schütteln oder Schwenken,

wobei die Bereitstellung der mikronisierten Wachszusammensetzung (C) in Schritt i) durch Zerkleinern des mindestens einen Wachses (W) in Anwesenheit des mindestens eines Emulgators (E), vorzugsweise in flüssiger oder gelöster Form, und gegebenenfalls in Anwesenheit des mindestens einen Dichteadditivs (D) und/oder des mindestens einen weiteren Additivs (A) unmittelbar vor Schritt ii) erfolgt oder eine Lagerung zwischen dem Zerkleinern und dem Vermischen in Schritt ii) umfasst.

15. Verwendung einer mikronisierten Wachszusammensetzung (C) gemäß einem der Ansprüche 12 bis 13 zur Herstellung einer wässrigen Formulierung.

16. Verwendung einer mikronisierten Wachszusammensetzung (C) gemäß einem der Ansprüche 12 bis 13 und/oder eines daraus erhaltenen Wachskonzentrats zum Verbessern der Kratzfestigkeit einer aus einer wässrigen Formulierung hergestellten Beschichtung.

**Claims**

1. A process for producing a micronized wax composition (C) comprising the step of:
   dry comminution of at least one wax (W) in the presence of at least one emulsifier (E) and optionally in the presence of at least one density additive (D) having a density at 20°C of > 1 g/cm$^3$, wherein the density additive (D) is substantially insoluble in water at 20°C, and optionally in the presence of at least one further additive (A) distinct from the at least one wax (W), the at least one emulsifier (E) and the at least one density additive (D), wherein the comminution is carried out with less than 20% by weight of water based on the amount of wax (W) employed for comminution.

2. The process as claimed in claim 1, wherein the at least one emulsifier (E) is present in liquid or dissolved form in the comminution.

3. The process as claimed in claim 1 or 2, wherein the wax (W) essentially does not form a stable dispersion in water.

4. The process as claimed in any of claims 1 to 3, wherein the density additive (D) is an organic additive, preferably selected from halogenated organic polymers and polysaccharides, more preferably selected from polytetrafluoroethylene wax, cellulose, hemicellulose, and/or an inorganic additive, preferably selected from salts, more preferably selected from salts of alkaline earth metals, more preferably selected from calcium sulfate, calcium carbonate, barium sulfate and barium carbonate.

5. The process as claimed in any of claims 1 to 4, wherein the following amounts of components are employed in the comminution:

   a) 40% to 99.9% by weight, preferably 50% to 99% by weight, more preferably 60% to 98.8% by weight, more preferably 65% to 98.5% by weight, more preferably 70% to 98% by weight, based on the weight of the employed components, of the at least one wax (W);
   b) 0.1% to 20% by weight, preferably 1% to 15% by weight, more preferably 1.2% to 8% by weight, more preferably 1.5% to 5% by weight, more preferably 2% to 4% by weight, based on the weight of the employed components, of the at least one emulsifier (E);
   c) optionally 0% to 59.9% by weight, preferably 0% to 45% by weight, more preferably 0% to 38% by weight, more preferably 0% to 30% by weight, more preferably 0% to 26% by weight, based on the weight of the employed components, of the at least one density additive (D); and
   d) optionally 0% to 50% by weight, preferably 0% to 45% by weight, more preferably 0% to 38% by weight, more preferably 0% to 30% by weight, more preferably 0% to 26% by weight, based on the weight of the employed components, of the at least one further additive (A).

6. The process as claimed in any of claims 1 to 5, wherein the wax (W) is selected from the group consisting of synthetic organic waxes, semisynthetic organic waxes, natural waxes, and mixtures thereof, wherein the wax may optionally be oxidized or otherwise chemically modified, preferably selected from polyolefin waxes, montan wax, rice bran wax, beeswax, sunflower wax, corn wax, carnauba wax, Fischer-Tropsch waxes, paraffin waxes, ester waxes and amide waxes, more preferably selected from polyethylene wax, polypropylene wax, poly(ethylene-co-propylene) wax, rice bran wax, corn wax and sunflower wax, more preferably is an HDPE wax.

7. The process as claimed in any of claims 1 to 6, wherein the emulsifier (E) is introduced to the wax (W) by spraying in liquid or dissolved form during comminution of the wax (W).

8. The process as claimed in any of claims 1 to 7, wherein the wax (W) is not oxidized and is not grafted with heteroatom-containing groups and preferably contains no polar groups.

9. The process as claimed in any of claims 1 to 8, wherein the wax (W) contains polar groups, preferably is oxidized or grafted with heteroatom-containing groups.

10. The process as claimed in any of claims 1 to 9, wherein the amount of density additive (D) is selected such that the density of the micronized wax composition (C) at 20°C is in the range from 0.94 to 1.20 g/cm$^3$, preferably from 0.96 to 1.10 g/cm$^3$, more preferably from 0.98 to 1.06 g/cm$^3$, more preferably from 1.00 to 1.04 g/cm$^3$.

11. The process as claimed in any of claims 1 to 10, wherein the wax (W) is comminuted to a volume median value D50 of the particle sizes in the range from 3 to 30 $\mu$m, preferably from 4 to 20 $\mu$m, more preferably from 5 to 15 $\mu$m, more preferably from 7 to 10 $\mu$m.

12. The micronized wax composition (C) comprising (preferably consisting of):

   a) at least one wax (W);
   b) at least one emulsifier (E);
   c) optionally at least one density additive (D) having a density at 20°C of > 1 g/cm$^3$, preferably > 1.3 g/cm$^3$, wherein the density additive (D) is substantially insoluble in water at 20°C; and
   d) optionally at least one further additive (A) distinct from the at least one wax (W), the at least one emulsifier (E) and the at least one density additive (D),

   wherein the micronized wax composition (C) is obtained by the process as claimed in any of claims 1 to 11 and wherein the water content of the micronized wax composition (C), measured with an HR73 moisture analyzer from Mettler Toledo, is less than 20% by weight, preferably less than 10% by weight, particularly preferably less than 5% by weight, based on the total weight of the micronized wax composition (C).

13. The micronized wax composition (C) as claimed in claim 12, comprising:

   a) 40% to 99.9% by weight, preferably 50% to 99% by weight, more preferably 60% to 98.8% by weight, more preferably 65% to 98.5% by weight, more preferably 70% to 98% by weight, based on the weight of the micronized wax composition (C), of the at least one wax (W);
   b) 0.1% to 20% by weight, preferably 1% to 15% by weight, more preferably 1.2% to 8% by weight, more preferably 1.5% to 5% by weight, more preferably 2% to 4% by weight, based on the weight of the micronized wax composition (C), of the at least one emulsifier (E);
   c) optionally 0% to 59.9% by weight, preferably 0% to 45% by weight, more preferably 0% to 38% by weight, more preferably 0% to 30% by weight, more preferably 0% to 26% by weight, based on the weight of the micronized wax composition (C), of the at least one density additive (D); and
   d) optionally 0% to 50% by weight, preferably 0% to 45% by weight, more preferably 0% to 38% by weight, more preferably 0% to 30% by weight, more preferably 0% to 26% by weight, based on the weight of the micronized wax composition (C), of the at least one further additive (A).

14. A process for producing an aqueous formulation comprising the steps of:

   i) providing water, the micronized wax composition (C) as claimed in either of claims 12 to 13 and optionally further components;
   ii) mixing the components provided in step i), preferably by stirring, shaking or swaying,

   wherein the provision of the micronized wax composition (C) in step i) by comminution of the at least one wax (W) in the presence of the at least one emulsifier (E), preferably in liquid or dissolved form, and optionally in the presence of the at least one density additive (D) and/or the at least one further additive (A) is carried out immediately before step ii) or comprises a storage between the comminution and the mixing in step ii).

15. The use of a micronized wax composition (C) as claimed in either of claims 12 to 13 for production of an aqueous formulation.

**16.** The use of a micronized wax composition (C) as claimed in either of claims 12 to 13 and/or of a wax concentrate obtained therefrom for improving the scratch resistance of a coating produced from an aqueous formulation.

**Revendications**

**1.** Procédé de préparation d'une composition de cire micronisée (C), comprenant l'étape consistant à :

broyage à sec d'au moins une cire (W) en présence d'au moins un émulsifiant (E) et, éventuellement, en présence d'au moins un additif de densité (D) ayant une densité à 20 °C > 1 g/cm$^3$, l'additif de densité (D) étant essentiellement insoluble dans l'eau à 20 °C, et éventuellement en présence d'au moins un autre additif (A) différent de la au moins une cire (W), du au moins un émulsifiant (E) et du au moins un additif de densité (D), le broyage ayant lieu avec moins de 20 % en poids d'eau, par rapport à la quantité de cire (W) utilisée pour le broyage.

**2.** Procédé selon la revendication 1, dans lequel le au moins un émulsifiant (E) est présent sous forme liquide ou dissoute lors du broyage.

**3.** Procédé selon la revendication 1 ou 2, dans lequel la cire (W) ne forme essentiellement aucune dispersion stable dans l'eau.

**4.** Procédé selon l'une des revendications 1 à 3, dans lequel l'additif de densité (D) est un additif organique, de préférence choisi parmi les polymères organiques halogénés et les polysaccharides, plus préférentiellement choisi parmi la cire de polytétrafluoroéthylène, la cellulose, l'hémicellulose ; et/ou un additif inorganique, de préférence choisi parmi les sels, plus préférentiellement choisi parmi les sels des métaux alcalino-terreux, plus préférentiellement choisi parmi le sulfate de calcium, le carbonate de calcium, le sulfate de baryum et le carbonate de baryum.

**5.** Procédé selon l'une des revendications 1 à 4, dans lequel les quantités suivantes de composants sont utilisées lors du broyage :

a) 40 à 99,9 % en poids, de préférence 50 à 99 % en poids, de préférence encore 60 à 98,8 % en poids, de préférence encore 65 à 98,5 % en poids, de préférence encore 70 à 98 % en poids, par rapport au poids des composants utilisés, d'au moins une cire (W) ;
b) 0,1 à 20 % en poids, de préférence 1 à 15 % en poids, de préférence 1,2 à 8 % en poids, de préférence 1,5 à 5 % en poids, de préférence 2 à 4 % en poids, par rapport au poids des composants utilisés, d'au moins un émulsifiant (E) ;
c) facultativement 0 à 59,9 % en poids, de préférence 0 à 45 % en poids, plus préférablement 0 à 38 % en poids, plus préférablement 0 à 30 % en poids, plus préférablement 0 à 26 % en poids, par rapport au poids des composants utilisés, d'au moins un additif de densité (D) ; et
d) facultativement 0 à 50 % en poids, de préférence 0 à 45 % en poids, plus préférentiellement 0 à 38 % en poids, plus préférentiellement 0 à 30 % en poids, plus préférentiellement 0 à 26 % en poids, par rapport au poids des composants utilisés, d'au moins un autre additif (A).

**6.** Procédé selon l'une des revendications 1 à 5, dans lequel la cire (W) est choisie dans le groupe constitué par les cires organiques synthétiques, les cires organiques semi-synthétiques, les cires naturelles et leurs mélanges, la cire pouvant éventuellement être oxydée ou modifiée chimiquement d'une autre manière, de préférence choisie parmi les cires polyoléfiniques, la cire de lignite, la cire de son de riz, la cire d'abeille, la cire de tournesol, la cire de maïs, la cire de carnauba, les cires Fischer-Tropsch, les cires de paraffine, les des cires esters et des cires amides, de préférence choisie parmi la cire de polyéthylène, la cire de polypropylène, la cire de poly(éthylène-co-propylène), la cire de son de riz, la cire de maïs et la cire de tournesol, de préférence une cire HDPE.

**7.** Procédé selon l'une des revendications 1 à 6, dans lequel l'émulsifiant (E) est pulvérisé sous forme liquide ou dissoute sur la cire (W) lors du broyage de la cire (W).

**8.** Procédé selon l'une des revendications 1 à 7, dans lequel la cire (W) n'est pas oxydée et n'est pas greffée avec des groupes contenant des hétéroatomes, et de préférence ne contient pas de groupes polaires.

**9.** Procédé selon l'une des revendications 1 à 8, dans lequel la cire (W) contient des groupes polaires, est de préférence oxydée ou greffée avec des groupes contenant des hétéroatomes.

10. Procédé selon l'une des revendications 1 à 9, dans lequel la quantité d'additif de densité (D) est choisie de telle sorte que la densité de la composition de cire micronisée (C) à 20 °C soit comprise entre 0,94 et 1,20 g/cm$^3$ , de préférence entre 0,96 et 1,10 g/cm$^3$ , de préférence de 0,98 à 1,06 g/cm$^3$ , plus préférablement de 1,00 à 1,04 g/cm$^3$ .

11. Procédé selon l'une des revendications 1 à 10, dans lequel la cire (W) est broyée à une valeur médiane volumique D50 des tailles de particules comprise entre 3 et 30 μm, de préférence entre 4 et 20 μm, de manière plus préférentielle entre 5 et 15 μm, de manière encore plus préférentielle entre 7 et 10 μm.

12. Composition de cire micronisée (C) comprenant (de préférence constituée de) :

a) au moins une cire (W) ;
b) au moins un émulsifiant (E) ;
c) facultativement au moins un additif de densité (D) ayant une densité à 20 °C > 1 g/cm$^3$ , de préférence > 1,3 g/cm$^3$ , l'additif de densité (D) étant essentiellement insoluble dans l'eau à 20 °C ; et
d) facultativement, au moins un autre additif (A) qui diffère de la au moins une cire (W), du au moins un émulsifiant (E) et du au moins un additif de densité (D),
la composition de cire micronisée (C) étant obtenue par le procédé selon l'une quelconque des revendications 1 à 11, et
la teneur en eau de la composition de cire micronisée (C), mesurée à l'aide d'un analyseur d'humidité HR73 de la société Mettler Toledo, étant inférieure à 20 % en poids, de préférence inférieure à 10 % en poids, de manière particulièrement préférée inférieure à 5 % en poids, par rapport au poids total de la composition de cire micronisée (C).

13. Composition de cire micronisée (C) selon la revendication 12, comprenant :

a) 40 à 99,9 % en poids, de préférence 50 à 99 % en poids, de préférence encore 60 à 98,8 % en poids, de préférence encore 65 à 98,5 % en poids, de préférence encore 70 à 98 % en poids, par rapport au poids de la composition de cire micronisée (C), d'au moins une cire (W) ;
b) 0,1 à 20 % en poids, de préférence 1 à 15 % en poids, de préférence encore 1,2 à 8 % en poids, de préférence encore 1,5 à 5 % en poids, de préférence encore 2 à 4 % en poids, par rapport au poids de la composition de cire micronisée (C), d'au moins un émulsifiant (E) ;
c) facultativement 0 à 59,9 % en poids, de préférence 0 à 45 % en poids, plus préférentiellement 0 à 38 % en poids, plus préférentiellement 0 à 30 % en poids, plus préférentiellement 0 à 26 % en poids, par rapport au poids de la composition de cire micronisée (C), d'au moins un additif de densité (D) ; et
d) facultativement 0 à 50 % en poids, de préférence 0 à 45 % en poids, plus préférentiellement 0 à 38 % en poids, plus préférentiellement 0 à 30 % en poids, plus préférentiellement 0 à 26 % en poids, par rapport au poids de la composition de cire micronisée (C), d'au moins un autre additif (A).

14. Procédé de préparation d'une formulation aqueuse, comprenant les étapes suivantes :

i) fournir de l'eau, la composition de cire micronisée (C) selon l'une des revendications 12 à 13, et éventuellement d'autres composants ;
ii) mélanger les composants fournis à l'étape i), de préférence par agitation, secouage ou brassage,

la fourniture de la composition de cire micronisée (C) à l'étape i) étant effectuée par broyage d'au moins une cire (W) en présence d'au moins un émulsifiant (E), de préférence sous forme liquide ou dissoute, et éventuellement en présence d'au moins un additif de densité (D) et/ou d'au moins un autre additif (A) immédiatement avant l'étape ii) ou comprend un stockage entre le broyage et le mélange à l'étape ii).

15. Utilisation d'une composition de cire micronisée (C) selon l'une des revendications 12 à 13 pour la fabrication d'une formulation aqueuse.

16. Utilisation d'une composition de cire micronisée (C) selon l'une des revendications 12 à 13 et/ou d'un concentré de cire obtenu à partir de celle-ci pour améliorer la résistance aux rayures d'un revêtement préparé à partir d'une formulation aqueuse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013007638
- DE 102018116113
- EP 2970700 A
- WO 2006131147 A
- DE 4330342
- DE 102004059060
- DE 19620810
- US 2016018334 A
- US 5746812 A
- WO 2012022389 A
- US 20090294971 A
- DE 102015226240


**In der Beschreibung aufgeführte Nicht-Patentliteratur**

- **JIAN et al.** *J.Appl. Polymer Sc.*, 12 December 2012, 1476-1483
- A Guidebook to Particle Size Analysis. Horiba Instruments, Inc., 2019
- Hochdruckpolymerisation, (Wachse). Ullmann's Encyclopedia of Industrial Chemistry. 1996, vol. A 28
- Ullmann's Encyclopedia of Industrial Chemistry. 1996, vol. A 28
- *Journal of the Society of Cosmetic Chemists*, 1954, vol. 5 (4), 249-256